# EUROPEAN PATENT APPLICATION

(11) **EP 3 267 634 A1**
(43) Date of publication of application: **10.01.2018**
(21) Application number: 17180048.5
(22) Date of filing: 06.07.2017
(51) Int. Cl.: H04L 12/58, H04M 1/725

(54) **TECHNIQUES FOR MESSAGING USING REPLICATION OF A CLIENT DATABASE**

(30) Priority: 06.07.2016 US 201662359141 P; 20.12.2016 US 201615385314; 21.12.2016 WO PCT/US2016/068078
(71) Applicant: Facebook, Inc., Menlo Park, CA 94025 (US)
(72) Inventor: Leach, Christopher Anthony, Menlo Park, CA California 94025 (US); Leupold, Felix, Menlo Park, CA California 94025 (US); Tuckett, Nicholas Miles, Menlo Park, CA California 94025 (US); Millican, Jonathan Richard, Menlo Park, CA California 94025 (US); Kathuria, Vishal, Menlo Park, CA California 94025 (US); Pauls, Leigh Jonathan Henry, Menlo Park, CA California 94025 (US)
(74) Representative: Schröer, Gernot H.

(57) **Abstract**

Techniques for messaging using replication of a client database are described. In one embodiment, an apparatus may comprise a local queue component operative to receive a message collection update at the first client device from a database synchronization system via an update queue, the message collection update for a message object collection, the message object collection associated with device-to-device messaging communication between the first client device and a second client device; and a local database management component operative to update a local database store for the message object collection on the client device using the message collection update, wherein updating the local database store is based on a collection identifier for the message collection update; and extract a device-to-device message from the message collection update, wherein extracting the device-to-device message from the message collection update empowers the messaging client to display the device-to-device message on the first client device. Other embodiments are described and claimed.

## Description

### TECHNICAL FIELD

This invention relates to a computer-implemented method, an apparatus and storage medium.

### RELATED APPLICATIONS

This application claims the benefit of priority to United States Patent Application Number 15/385,314, titled "Techniques for Messaging Using Replication of a Client Database," filed on December 20, 2016.

This application claims the benefit of priority under 35 U.S.C. § 119(e) to United States Provisional Patent Application Number 62/359,141, titled "Techniques for Messaging Using Replication of a Client Database," filed on July 6, 2016.

### BACKGROUND

Mobile devices may run applications, commonly known as "apps," on behalf of their users. These applications may execute as processes on a device. These applications may engage in network activity on the mobile device, such as may use wireless signals, including Wi-Fi, cellular data, and/or other technologies.

Cellular carriers may provide cellular data communication to their cellular customers. For example, smart phones and other mobile devices may run web browsers that may be used while on the cellular network to retrieve web pages. Additionally, many applications that may be pre-installed or user-installed on a mobile device may use cellular data communication to access remote data, such as resources available on the Internet.

### SUMMARY

The following presents a simplified summary in order to provide a basic understanding of some novel embodiments described herein. This summary is not an extensive overview, and it is not intended to identify key/critical elements or to delineate the scope thereof. Some concepts are presented in a simplified form as a prelude to the more detailed description that is presented later.

Various embodiments are generally directed to techniques for messaging using replication of a client database. Some embodiments are particularly directed to techniques for messaging using replication of a client database using the queued pushing of database state updates. In one embodiment, for example, an apparatus may comprise a local queue component of a messaging client operative to receive a message collection update at the first client device from a database synchronization system via an update queue for the database synchronization system, the message collection update for a message object collection, the message object collection associated with device-to-device messaging communication between the first client device and a second client device; and a local database management component of the messaging client operative to update a local database store for the message object collection on the client device using the message collection update, wherein updating the local database store is based on a collection identifier for the message collection update; and extract a device-to-device message from the message collection update, wherein extracting the device-to-device message from the message collection update empowers the messaging client to display the device-to-device message on the first client device. Other embodiments are described and claimed.

To the accomplishment of the foregoing and related ends, certain illustrative aspects are described herein in connection with the following description and the annexed drawings. These aspects are indicative of the various ways in which the principles disclosed herein can be practiced and all aspects and equivalents thereof are intended to be within the scope of the claimed subject matter. Other advantages and novel features will become apparent from the following detailed description when considered in conjunction with the drawings.

Embodiments according to the invention are in particular disclosed in the attached claims directed to a method, a storage medium, a system and a computer program product, wherein any feature mentioned in one claim category, e.g. method, can be claimed in another claim category, e.g. system, as well. The dependencies or references back in the attached claims are chosen for formal reasons only. However, any subject matter resulting from a deliberate reference back to any previous claims (in particular multiple dependencies) can be claimed as well, so that any combination of claims and the features thereof is disclosed and can be claimed regardless of the dependencies chosen in the attached claims. The subject-matter which can be claimed comprises not only the combinations of features as set out in the attached claims but also any other combination of features in the claims, wherein each feature mentioned in the claims can be combined with any other feature or combination of other features in the claims. Furthermore, any of the embodiments and features described or depicted herein can be claimed in a separate claim and/or in any combination with any embodiment or feature described or depicted herein or with any of the features of the attached claims.

In an embodiment according to the invention, a computer-implemented method comprises:
receiving a message collection update at a first client device from a database synchronization system via an update queue for the database synchronization system, the message collection update for a message object collection, the message object collection associated with device-to-device messaging communication between the first client device and a second client device;
updating a local database store for the message object collection on the client device using the message collection update, wherein updating the local database store is based on a collection identifier for the message collection update;
extracting a device-to-device message from the message collection update; and
displaying the device-to-device message on the first client device.

A computer-implemented method may comprise the message collection update associated with a primary key and a sorting key, the primary key comprising a message identifier, the sorting key comprising a timestamp for the message collection update.

A computer-implemented method may comprise the message object collection comprising a plurality of device-to-device message objects, wherein each of the plurality of device-to-device message objects is addressed to the first client device.

A computer-implemented method may comprise:
retrieving device-to-device configuration information specific to the device-to-device messaging communication between the first client device and the second client device; and
extracting the device-to-device message from the message collection update based on the device-to-device configuration information.

A computer-implemented method may comprise, the device-to-device messaging communication between the first client device and the second client device embodied in a device-to-device message thread, further comprising:
receiving a messaging composition interaction via the user interface for the device-to-device message thread, the messaging composition interaction comprising a user message;
generating a device-to-device message object comprising the user message; and
writing the device-to-device message object to a second-client-device-specific message object collection, wherein the second-client-device-specific message object collection is replicated to the second client device by the database synchronization system.

A computer-implemented method may comprise, the first client device associated with a first user account, further comprising:
receiving a device-to-device messaging communication invitation on the first client device, the device-to-device messaging communication invitation received as invitation object, the invitation object specifying a second-client-device-specific message object collection;
accepting the device-to-device messaging communication invitation on the first client in response to receiving the device-to-device messaging communication invitation on the first client device; and
deleting the invitation object in response to receiving the device-to-device messaging communication invitation, wherein deleting the device-to-device messaging communication invitation is operative to delete the invitation object from one or more other client devices associated with the first user account.

A computer-implemented method may comprise, the first client device associated with a first user account, the second client device associated with a second user account, further comprising:
displaying a user-to-user message thread display on the first client device, the user-to-user message thread display associated with a user-to-user message thread between the first user account and the second user account, the user-to-user message thread display including a device-to-device message thread invocation control;
receiving a user activation of the device-to-device message thread invocation control in association with the user-to-user message thread display; and
sending a device-to-device messaging communication invitation to the second user account in response to receiving the user activation of the device-to-device message thread invocation control.

In an embodiment according to the invention, an apparatus may comprise:
a processor circuit on a first client device;
a local queue component of a messaging client operative on the processor circuit to receive a message collection update at the first client device from a database synchronization system via an update queue for the database synchronization system, the message collection update for a message object collection, the message object collection associated with device-to-device messaging communication between the first client device and a second client device; and
a local database management component of the messaging client operative on the processor circuit to update a local database store for the message object collection on the client device using the message collection update, wherein updating the local database store is based on a collection identifier for the message collection update; and extract a device-to-device message from the message collection update, wherein extracting the device-to-device message from the message collection update empowers the messaging client to display the device-to-device message on the first client device.

An apparatus may comprise, the message collection update associated with a primary key and a sorting key, the primary key comprising a message identifier, the sorting key comprising a timestamp for the message collection update.

An apparatus may comprise, the message object collection comprising a plurality of device-to-device message objects, wherein each of the plurality of device-to-device message objects is addressed to the first client device.

An apparatus may comprise:
the local database management component operative to retrieve device-to-device configuration information specific to the device-to-device messaging communication between the first client device and the second client device; and extract the device-to-device message from the message collection update based on the device-to-device configuration information.

An apparatus may comprise, the device-to-device messaging communication between the first client device and the second client device embodied in a device-to-device message thread, further comprising:
the messaging client operative to receive a messaging composition interaction via the user interface for the device-to-device message thread, the messaging composition interaction comprising a user message; and
the local database management component operative to generate a device-to-device message object comprising the user message; and write the device-to-device message object to a second-client-device-specific message object collection, wherein the second-client-device-specific message object collection is replicated to the second client device by the database synchronization system.

An apparatus may comprise, the first client device associated with a first user account, further comprising:
the local queue component operative to receive a device-to-device messaging communication invitation on the first client device, the device-to-device messaging communication invitation received as invitation object, the invitation object specifying a second-client-device-specific message object collection; and
the local database management component operative to accept the device-to-device messaging communication invitation on the first client in response to receiving the device-to-device messaging communication invitation on the first client device; and delete the invitation object in response to receiving the device-to-device messaging communication invitation, wherein deleting the device-to-device messaging communication invitation is operative to delete the invitation object from one or more other client devices associated with the first user account.

An apparatus may comprise, the first client device associated with a first user account, the second client device associated with a second user account, further comprising:
the messaging client operative to display a user-to-user message thread display on the first client device, the user-to-user message thread display associated with a user-to-user message thread between the first user account and the second user account, the user-to-user message thread display including a device-to-device message thread invocation control; and receive a user activation of the device-to-device message thread invocation control in association with the user-to-user message thread display; and
the local queue component operative to send a device-to-device messaging communication invitation to the second user account in response to receiving the user activation of the device-to-device message thread invocation control.

In an embodiment according to the invention, at least one computer-readable storage medium comprising instructions that, when executed, cause a system to:
receive a message collection update at a first client device from a database synchronization system via an update queue for the database synchronization system, the message collection update for a message object collection, the message object collection associated with device-to-device messaging communication between the first client device and a second client device, the message object collection comprising a plurality of device-to-device message objects, wherein each of the plurality of device-to-device message objects is addressed to the first client device;
update a local database store for the message object collection on the client device using the message collection update, wherein updating the local database store is based on a collection identifier for the message collection update;
extract a device-to-device message from the message collection update; and
display the device-to-device message on the first client device.

A computer-readable storage medium may comprise, the message collection update associated with a primary key and a sorting key, the primary key comprising a message identifier, the sorting key comprising a timestamp for the message collection update.

A computer-readable storage medium may comprise further instructions that, when executed, cause a system to:
retrieve device-to-device configuration information specific to the device-to-device messaging communication between the first client device and the second client device; and
extract the device-to-device message from the message collection update based on the device-to-device configuration information.

A computer-readable storage medium may comprise, the device-to-device messaging communication between the first client device and the second client device embodied in a device-to-device message thread, further comprising further instructions that, when executed, cause a system to:
receive a messaging composition interaction via the user interface for the device-to-device message thread, the messaging composition interaction comprising a user message;
generate a device-to-device message object comprising the user message; and
write the device-to-device message object to a second-client-device-specific message object collection, wherein the second-client-device-specific message object collection is replicated to the second client device by the database synchronization system.

A computer-readable storage medium may comprise, the first client device associated with a first user account, further comprising further instructions that, when executed, cause a system to:
receive a device-to-device messaging communication invitation on the first client device, the device-to-device messaging communication invitation received as invitation object, the invitation object specifying a second-client-device-specific message object collection;
accept the device-to-device messaging communication invitation on the first client in response to receiving the device-to-device messaging communication invitation on the first client device; and
delete the invitation object in response to receiving the device-to-device messaging communication invitation, wherein deleting the device-to-device messaging communication invitation is operative to delete the invitation object from one or more other client devices associated with the first user account.

A computer-readable storage medium may comprise, the first client device associated with a first user account, the second client device associated with a second user account, further comprising further instructions that, when executed, cause a system to:
display a user-to-user message thread display on the first client device, the user-to-user message thread display associated with a user-to-user message thread between the first user account and the second user account, the user-to-user message thread display including a device-to-device message thread invocation control;
receive a user activation of the device-to-device message thread invocation control in association with the user-to-user message thread display; and
send a device-to-device messaging communication invitation to the second user account in response to receiving the user activation of the device-to-device message thread invocation control.

In a further embodiment according to the invention, one or more computer-readable non-transitory storage media embody software that is operable when executed to perform a method according to the invention or any of the above mentioned embodiments.

In a further embodiment according to the invention, a system comprises: one or more processors; and at least one memory coupled to the processors and comprising instructions executable by the processors, the processors operable when executing the instructions to perform a method according to the invention or any of the above mentioned embodiments.

In a further embodiment according to the invention, a computer program product, preferably comprising a computer-readable non-transitory storage media, is operable when executed on a data processing system to perform a method according to the invention or any of the above mentioned embodiments.

### BRIEF DESCRIPTION OF THE DRAWINGS

- **FIG. 1**: illustrates an embodiment of a replicated database messaging system.
- **FIG. 2**: illustrates an embodiment of a social graph.
- **FIG. 3A**: illustrates an embodiment of a user interface for a message thread selection interface.
- **FIG. 3B**: illustrates an embodiment of a user interface for a message thread.
- **FIG. 3C**: illustrates an embodiment of a user interface for a contact settings interface for a message thread.
- **FIG. 3D**: illustrates an embodiment of a user interface for a device-to-device message thread.
- **FIG. 3E**: illustrates an embodiment of a user interface for a message thread selection interface with a device-to-device message thread entry.
- **FIG. 3F**: illustrates an embodiment of a user interface for a device-to-device message thread with exchanged device-to-device messages.
- **FIG. 3G**: illustrates an embodiment of a user interface for a device-to-device contact settings interface for a device-to-device message thread.
- **FIG. 3H**: illustrates an embodiment of a user interface for a message thread selection interface with a device-to-device message thread entry with a customized device-to-device conversation name display.
- **FIG. 3I**: illustrates an embodiment of a user interface for a messaging client settings interface with a preferred device-to-device client device control.
- **FIG. 4A**: illustrates an embodiment of the replicated database messaging system registering a message thread invitation from an inviting client device.
- **FIG. 4B**: illustrates an embodiment of the replicated database messaging system forwarding a message thread invitation to an invited client device and a second invited client device.
- **FIG. 4C**: illustrates an embodiment of the replicated database messaging system processing an object collection creation.
- **FIG. 4D**: illustrates an embodiment of the replicated database messaging system processing an invitation deletion in response to the acceptance of a message thread invitation by an invited client device.
- **FIG. 5A**: illustrates an embodiment of the replicated database messaging system processing a message sent from a sending client device.
- **FIG. 5B**: illustrates an embodiment of the replicated database messaging system sending a collection update to a receiving client device.
- **FIG. 6**: illustrates an embodiment of a logic flow for the system of FIG. 1.
- **FIG. 7**: illustrates an embodiment of a centralized system for the system of FIG. 1.
- **FIG. 8**: illustrates an embodiment of a distributed system for the system of FIG. 1.
- **FIG. 9**: illustrates an embodiment of a computing architecture.
- **FIG. 10**: illustrates an embodiment of a communications architecture.
- **FIG. 11**: illustrates an embodiment of a radio device architecture.

### DETAILED DESCRIPTION

Applications on a client device may store data locally on the client device in a local data store. An independent local data store may be used by an application that executes independently on a client device. However, some applications may be part of a system across multiple devices. This system may include server devices and other client devices. These applications may benefit from using a data store replicated across the multiple devices.

In one case, a replicated data store may be used to synchronize data between two or more client devices. For example, instances of an application may be installed on two or more client devices. These instances of the application may have their data synchronized using a replicated database, such that a write to the local data store on one client device is copied to the local data store on one or more other client devices. As such, once replication operations have been performed, a read operation on one client device and another client device will retrieve the same data. Replication between client devices used by the same user may serve to provide a consistent experience across multiple client devices for that user. For example, user preferences and other configuration information may be replicated between client devices. This may be convenient both where a user regularly switches between devices and where a user transitions from one device to another. In another example, data may be replicated between client devices used by different users so as to share data between the users.

In another case, a replicated data store may be used to synchronize data between one or more client devices and one or more server devices. For example, an application and a server providing services to the application may have their data synchronized using a replicated database. As such, a write to the local data store on a client device is copied to the data store for the one or more server devices. As such, once replication operations have been performed, a read operation on a client device and a server device will retrieve the same data. Replication between client devices and server devices may serve to synchronize the operations of one or more client devices with the server devices that support it. For example, user preferences set on a client device may configure the operations of both a client device and a server device. Similarly, application configurations set on a server device may configure the operations of the client device. Further, the replication of application data from a client device to a server device may provide a backup of the client data on the server device.

In a further case, a replicated data store may be used to synchronize messages between one or more client devices, which may use one or more server devices as intermediaries for other processing of the messages. The replicated data store may be used for device-to-device communication. Device-to-device communication may be desirable as an optional feature within a messaging system that generally distributes a user's incoming and outgoing messages to all of a user's devices. Device-to-device communication may be used to receive a greater degree of privacy, allowing a user to customize exactly which devices messages within a particular message thread can be sent from and will be received on. The privacy of this device-to-device communication may be enhanced using, in some cases, ephemeral messaging, in which messages are removed after a defined period of time. Because a received message may be viewed on a single device, it may be practical to using a period of time based on the seen-time of the message, such that the message is removed for the receiving user based on the time at which they first view the message, rather than the time that it is sent by a sending device.

An application on a client device, particular a mobile client device, may function in a network environment with performance deficits. For instance, a cellular data network may have limited bandwidth available, long round-trip times, and provide unreliable service. Further, a mobile device may have a cellular data allocation. Similarly, a mobile device may have limited power available, which gets used when transmitting or receiving data. As such, the client device may benefit from a replication system that refrains from using mobile data when no data is available for replication. Therefore, the replication system may use a push system in which a server system contacts client devices when additional data is available for replication, with the client devices only reaching out to other devices when local changes to a data store are available for replication off the client devices. As a result, the embodiment can improve the performance of a data store for client devices.

Reference is now made to the drawings, wherein like reference numerals are used to refer to like elements throughout. In the following description, for purposes of explanation, numerous specific details are set forth in order to provide a thorough understanding thereof. It may be evident, however, that the novel embodiments can be practiced without these specific details. In other instances, well known structures and devices are shown in block diagram form in order to facilitate a description thereof. The intention is to cover all modifications, equivalents, and alternatives consistent with the claimed subject matter.

It is worthy to note that "*a*" and "*b*" and "*c*" and similar designators as used herein are intended to be variables representing any positive integer. Thus, for example, if an implementation sets a value for *a* = 5, then a complete set of components 122 illustrated as components 122-1 through 122-*a* may include components 122-1, 122-2, 122-3, 122-4 and 122-5. The embodiments are not limited in this context.

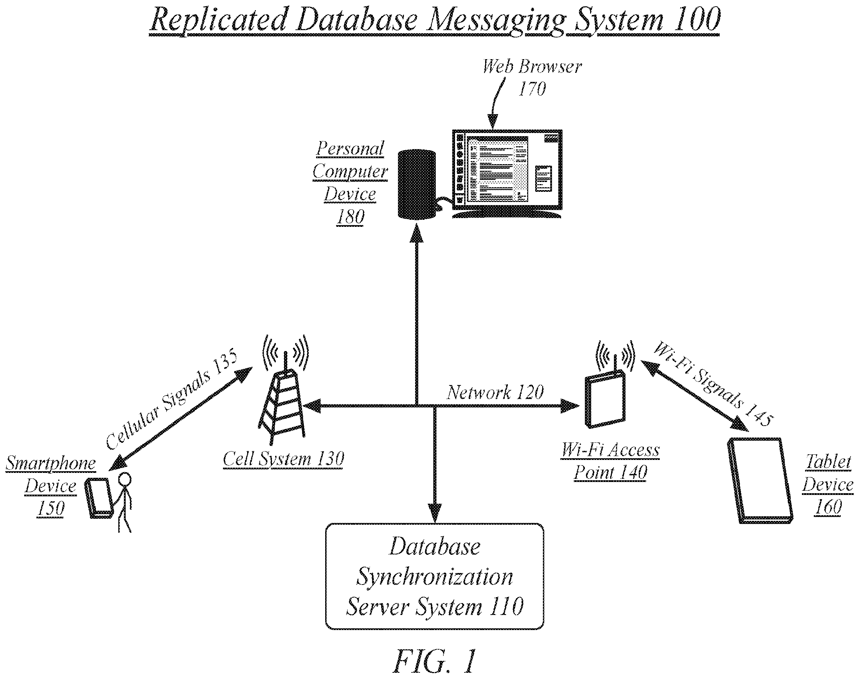

**FIG. 1** illustrates a block diagram for a replicated database messaging system 100. In one embodiment, the replicated database messaging system 100 may comprise a computer-implemented system having software applications comprising one or more components. Although the replicated database messaging system 100 shown in FIG. 1 has a limited number of elements in a certain topology, it may be appreciated that the replicated database messaging system 100 may include more or less elements in alternate topologies as desired for a given implementation.

The database synchronization server system 110 may comprise one or more database synchronization servers operated by a data replication platform as part of the replicated database messaging system 100. A database synchronization server may comprise an Internet-accessible server, with the network 120 connecting the various devices of the replicated database messaging system 100 comprising, at least in part, the Internet.

A user may own and operate a smartphone device 150. The smartphone device 150 may comprise an iPhone® device, an Android® device, a Blackberry® device, or any other mobile computing device conforming to a smartphone form. The smartphone device 150 may be a cellular device capable of connecting to a network 120 via a cell system 130 using cellular signals 135. In some embodiments and in some cases the smartphone device 150 may additionally or alternatively use Wi-Fi or other networking technologies to connect to the network 120. The smartphone device 150 may execute a messaging client, web browser, or other local application to access the database synchronization server system 110.

The same user may own and operate a tablet device 160. The tablet device 150 may comprise an iPad® device, an Android® tablet device, a Kindle Fire® device, or any other mobile computing device conforming to a tablet form. The tablet device 160 may be a Wi-Fi device capable of connecting to a network 120 via a Wi-Fi access point 140 using Wi-Fi signals 145. In some embodiments and in some cases the tablet device 160 may additionally or alternatively use cellular or other networking technologies to connect to the network 120. The tablet device 160 may execute a messaging client, web browser, or other local application to access the database synchronization server system 110.

The same user may own and operate a personal computer device 180. The personal computer device 180 may comprise a Mac OS® device, Windows® device, Linux® device, or other computer device running another operating system. The personal computer device 180 may be an Ethernet device capable of connecting to a network 120 via an Ethernet connection. In some embodiments and in some cases the personal computer device 180 may additionally or alternatively use cellular, Wi-Fi, or other networking technologies to the network 120. The personal computer device 180 may execute a messaging client, web browser 170, or other local application to access the database synchronization server system 110.

A messaging client may be a dedicated messaging client. A dedicated messaging client may be specifically associated with a messaging provider administering the messaging platform including the database synchronization server system 110. A dedicated messaging client may be a general client operative to work with a plurality of different messaging providers including the messaging provider administering the messaging platform including the database synchronization server system 110.

The messaging client may be a component of an application providing additional functionality. For example, a social networking service may provide a social networking application for use on a mobile device for accessing and using the social networking service. The social networking service may include messaging functionality such as may be provided by one or more elements of the database synchronization server system 110. It will be appreciated that messaging servers for the database synchronization server system 110 may be one component of a computing device for the social networking service, with the computing device providing additional functionality of the social networking service. Similarly, the social networking application may provide both messaging functionality and additional social networking functionality.

In some cases a messaging endpoint may retain state between user sessions and in some cases a messaging endpoint may relinquish state between user session. A messaging endpoint may use a local store to retain the current state of a message inbox. This local store may be saved in persistent storage such that the state may be retrieved between one session and the next, including situations in which, for example, a local application is quit or otherwise removed from memory or a device is powered off and on again. Alternatively, a messaging endpoint may use a memory cache to retain the current state of a message inbox but refrain from committing the state of the message inbox to persistent storage. The messaging endpoint may use a local store that is replicated across multiple devices, which may include one or both of other client devices and server devices.

A messaging endpoint that retains the state of a message inbox may comprise a dedicated messaging application or a messaging utility integrated into another local application, such as a social networking application. A messaging endpoint that relinquishes state of a message inbox may comprise messaging access implemented within a web browser. In one embodiment, a web browser, such as web browser 170 executing on personal computer device 180, may execute HTML code that interacts with the messaging server to present messaging functionality to a user.

A user may save and retrieve data from a plurality of devices, including the smartphone device 150, tablet device 160, and personal computer device 180. The user may use a first messaging application on the smartphone device 150, a second messaging application on the tablet device 160, and the web browser 170 on the personal computer device 180. The first and second messaging applications may comprise installations of the same application on both devices. The first and second messaging applications may comprise a smartphone-specific and a tablet-specific version of a common application. The first and second messaging application may comprise distinct applications.

The user may benefit from having their message inbox, application configurations, and/or other data kept consistent between their devices. A user may use their smartphone device 150 on the cell system 130 while away from their home, sending and receiving messages via the cells system 130. The user may stop by a coffee shop, or other location offering Wi-Fi, and connect their tablet device 160 to a Wi-Fi access point 140. The tablet device 160 may retrieve its existing known state for the message inbox and receive updates that have happened since the last occasion on which the tablet device 160 had access to a network, including any messages sent by the smartphone device 150 and that may have been received by the user while operating the smartphone device 150. The user may then return home and access their message inbox using a web browser 170 on a personal computer device 180. The web browser 170 may receive a snapshot of the current state of the message inbox from the database synchronization server system 110 due to it not maintaining or otherwise not having access to an existing state for the message inbox. The web browser 170 may then retrieve incremental updates for any new changes to the state of the message inbox so long as it maintains a user session with the database synchronization server system 110, discarding its known state for the message inbox at the end of the session, such as when the web browser 170 is closed by the user. Without limitation, an update may correspond to the addition of a message to a mailbox, a deletion of a message from a mailbox, and a read receipt.

The database synchronization server system 110 may use knowledge generated from interactions in between users. The database synchronization server system 110 may comprise a component of a social-networking system and may use knowledge generated from the broader interactions of the social-networking system. As such, to protect the privacy of the users of the database synchronization server system 110 and the larger social-networking system, database synchronization server system 110 may include an authorization server (or other suitable component(s)) that allows users to opt in to or opt out of having their actions logged by the database synchronization server system 110 or shared with other systems (e.g., third-party systems), for example, by setting appropriate privacy settings. A privacy setting of a user may determine what information associated with the user may be logged, how information associated with the user may be logged, when information associated with the user may be logged, who may log information associated with the user, whom information associated with the user may be shared with, and for what purposes information associated with the user may be logged or shared. Authorization servers or other authorization components may be used to enforce one or more privacy settings of the users of the database synchronization server system 110 and other elements of a social-networking system through blocking, data hashing, anonymization, or other suitable techniques as appropriate.

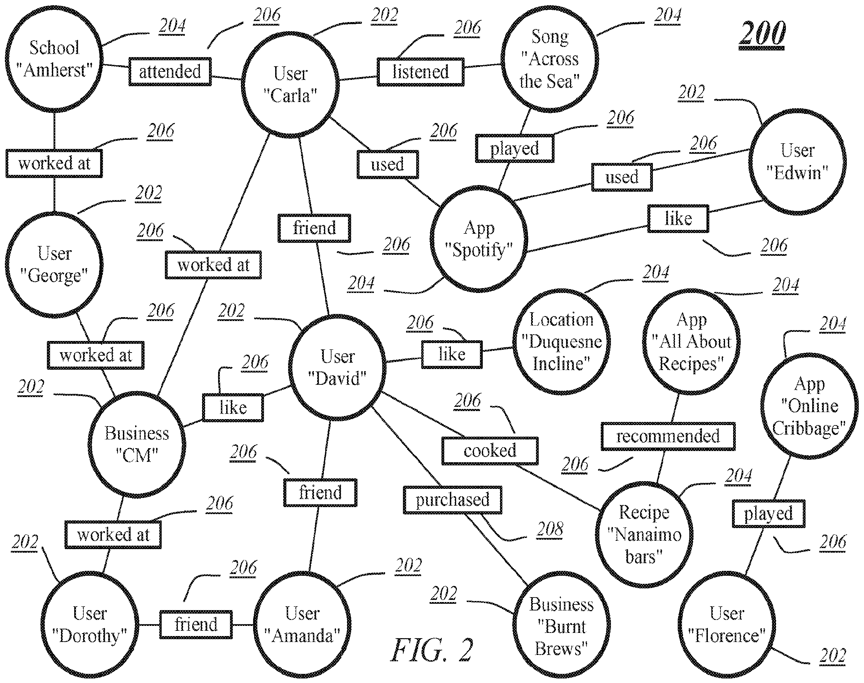

**FIG. 2** illustrates an example of a social graph 200. In particular embodiments, a social-networking system may store one or more social graphs 200 in one or more data stores as a social graph data structure.

In particular embodiments, social graph 200 may include multiple nodes, which may include multiple user nodes 202 and multiple concept nodes 204. Social graph 200 may include multiple edges 206 connecting the nodes. In particular embodiments, a social-networking system, client system, third-party system, or any other system or device may access social graph 200 and related social-graph information for suitable applications. The nodes and edges of social graph 200 may be stored as data objects, for example, in a data store (such as a social-graph database). Such a data store may include one or more searchable or queryable indexes of nodes or edges of social graph 200.

In particular embodiments, a user node 202 may correspond to a user of the social-networking system. As an example and not by way of limitation, a user may be an individual (human user), an entity (e.g., an enterprise, business, or third-party application), or a group (e.g., of individuals or entities) that interacts or communicates with or over the social-networking system. In particular embodiments, when a user registers for an account with the social-networking system, the social-networking system may create a user node 202 corresponding to the user, and store the user node 202 in one or more data stores. Users and user nodes 202 described herein may, where appropriate, refer to registered users and user nodes 202 associated with registered users. In addition or as an alternative, users and user nodes 202 described herein may, where appropriate, refer to users that have not registered with the social-networking system. In particular embodiments, a user node 202 may be associated with information provided by a user or information gathered by various systems, including the social-networking system. As an example and not by way of limitation, a user may provide their name, profile picture, contact information, birth date, sex, marital status, family status, employment, education background, preferences, interests, or other demographic information. In particular embodiments, a user node 202 may be associated with one or more data objects corresponding to information associated with a user. In particular embodiments, a user node 202 may correspond to one or more webpages. A user node 202 may be associated with a unique user identifier for the user in the social-networking system.

In particular embodiments, a concept node 204 may correspond to a concept. As an example and not by way of limitation, a concept may correspond to a place (such as, for example, a movie theater, restaurant, landmark, or city); a website (such as, for example, a website associated with the social-network service or a third-party website associated with a web-application server); an entity (such as, for example, a person, business, group, sports team, or celebrity); a resource (such as, for example, an audio file, video file, digital photo, text file, structured document, or application) which may be located within the social-networking system or on an external server, such as a web-application server; real or intellectual property (such as, for example, a sculpture, painting, movie, game, song, idea, photograph, or written work); a game; an activity; an idea or theory; another suitable concept; or two or more such concepts. A concept node 204 may be associated with information of a concept provided by a user or information gathered by various systems, including the social-networking system. As an example and not by way of limitation, information of a concept may include a name or a title; one or more images (e.g., an image of the cover page of a book); a location (e.g., an address or a geographical location); a website (which may be associated with a URL); contact information (e.g., a phone number or an email address); other suitable concept information; or any suitable combination of such information. In particular embodiments, a concept node 204 may be associated with one or more data objects corresponding to information associated with concept node 204. In particular embodiments, a concept node 204 may correspond to one or more webpages.

In particular embodiments, a node in social graph 200 may represent or be represented by a webpage (which may be referred to as a "profile page"). Profile pages may be hosted by or accessible to the social-networking system. Profile pages may also be hosted on third-party websites associated with a third-party server. As an example and not by way of limitation, a profile page corresponding to a particular external webpage may be the particular external webpage and the profile page may correspond to a particular concept node 204. Profile pages may be viewable by all or a selected subset of other users. As an example and not by way of limitation, a user node 202 may have a corresponding user-profile page in which the corresponding user may add content, make declarations, or otherwise express himself or herself. A business page such as business page 205 may comprise a user-profile page for a commerce entity. As another example and not by way of limitation, a concept node 204 may have a corresponding concept-profile page in which one or more users may add content, make declarations, or express themselves, particularly in relation to the concept corresponding to concept node 204.

In particular embodiments, a concept node 204 may represent a third-party webpage or resource hosted by a third-party system. The third-party webpage or resource may include, among other elements, content, a selectable or other icon, or other inter-actable object (which may be implemented, for example, in JavaScript, AJAX, or PHP codes) representing an action or activity. As an example and not by way of limitation, a third-party webpage may include a selectable icon such as "like," "check in," "eat," "recommend," or another suitable action or activity. A user viewing the third-party webpage may perform an action by selecting one of the icons (e.g., "eat"), causing a client system to send to the social-networking system a message indicating the user's action. In response to the message, the social-networking system may create an edge (e.g., an "eat" edge) between a user node 202 corresponding to the user and a concept node 204 corresponding to the third-party webpage or resource and store edge 206 in one or more data stores.

In particular embodiments, a pair of nodes in social graph 200 may be connected to each other by one or more edges 206. An edge 206 connecting a pair of nodes may represent a relationship between the pair of nodes. In particular embodiments, an edge 206 may include or represent one or more data objects or attributes corresponding to the relationship between a pair of nodes. As an example and not by way of limitation, a first user may indicate that a second user is a "friend" of the first user. In response to this indication, the social-networking system may send a "friend request" to the second user. If the second user confirms the "friend request," the social-networking system may create an edge 206 connecting the first user's user node 202 to the second user's user node 202 in social graph 200 and store edge 206 as social-graph information in one or more data stores. In the example of FIG. 2, social graph 200 includes an edge 206 indicating a friend relation between user nodes 202 of user "Amanda" and user "Dorothy." Although this disclosure describes or illustrates particular edges 206 with particular attributes connecting particular user nodes 202, this disclosure contemplates any suitable edges 206 with any suitable attributes connecting user nodes 202. As an example and not by way of limitation, an edge 206 may represent a friendship, family relationship, business or employment relationship, fan relationship, follower relationship, visitor relationship, subscriber relationship, superior/subordinate relationship, reciprocal relationship, non-reciprocal relationship, another suitable type of relationship, or two or more such relationships. Moreover, although this disclosure generally describes nodes as being connected, this disclosure also describes users or concepts as being connected. Herein, references to users or concepts being connected may, where appropriate, refer to the nodes corresponding to those users or concepts being connected in social graph 200 by one or more edges 206.

In particular embodiments, an edge 206 between a user node 202 and a concept node 204 may represent a particular action or activity performed by a user associated with user node 202 toward a concept associated with a concept node 204. As an example and not by way of limitation, as illustrated in FIG. 2, a user may "like," "attended," "played," "listened," "cooked," "worked at," or "watched" a concept, each of which may correspond to a edge type or subtype. A concept-profile page corresponding to a concept node 204 may include, for example, a selectable "check in" icon (such as, for example, a clickable "check in" icon) or a selectable "add to favorites" icon. Similarly, after a user clicks these icons, the social-networking system may create a "favorite" edge or a "check in" edge in response to a user's action corresponding to a respective action. As another example and not by way of limitation, a user (user "Carla") may listen to a particular song ("Across the Sea") using a particular application (SPOTIFY, which is an online music application). In this case, the social-networking system may create a "listened" edge 206 and a "used" edge (as illustrated in FIG. 2) between user nodes 202 corresponding to the user and concept nodes 204 corresponding to the song and application to indicate that the user listened to the song and used the application. Moreover, the social-networking system may create a "played" edge 206 (as illustrated in FIG. 2) between concept nodes 204 corresponding to the song and the application to indicate that the particular song was played by the particular application. In this case, "played" edge 206 corresponds to an action performed by an external application (SPOTIFY) on an external audio file (the song "Across the Sea"). Although this disclosure describes particular edges 206 with particular attributes connecting user nodes 202 and concept nodes 204, this disclosure contemplates any suitable edges 206 with any suitable attributes connecting user nodes 202 and concept nodes 204. Moreover, although this disclosure describes edges between a user node 202 and a concept node 204 representing a single relationship, this disclosure contemplates edges between a user node 202 and a concept node 204 representing one or more relationships. As an example and not by way of limitation, an edge 206 may represent both that a user likes and has used at a particular concept. Alternatively, another edge 206 may represent each type of relationship (or multiples of a single relationship) between a user node 202 and a concept node 204 (as illustrated in FIG. 2 between user node 202 for user "Edwin" and concept node 204 for "SPOTIFY").

In particular embodiments, the social-networking system may create an edge 206 between a user node 202 and a concept node 204 in social graph 200. As an example and not by way of limitation, a user viewing a concept-profile page (such as, for example, by using a web browser or a special-purpose application hosted by the user's client system) may indicate that he or she likes the concept represented by the concept node 204 by clicking or selecting a "Like" icon, which may cause the user's client system to send to the social-networking system a message indicating the user's liking of the concept associated with the concept-profile page. In response to the message, the social-networking system may create an edge 206 between user node 202 associated with the user and concept node 204, as illustrated by "like" edge 206 between the user and concept node 204. In particular embodiments, the social-networking system may store an edge 206 in one or more data stores. In particular embodiments, an edge 206 may be automatically formed by the social-networking system in response to a particular user action. As an example and not by way of limitation, if a first user uploads a picture, watches a movie, or listens to a song, an edge 206 may be formed between user node 202 corresponding to the first user and concept nodes 204 corresponding to those concepts. Although this disclosure describes forming particular edges 206 in particular manners, this disclosure contemplates forming any suitable edges 206 in any suitable manner.

The social graph 200 may further comprise a plurality of product nodes. Product nodes may represent particular products that may be associated with a particular business. A business may provide a product catalog to the consumer-to-business service 110 and the consumer-to-business service 110 may therefore represent each of the products within the product in the social graph 200 with each product being in a distinct product node. A product node may comprise information relating to the product, such as pricing information, descriptive information, manufacturer information, availability information, and other relevant information. For example, each of the items on a menu for a restaurant may be represented within the social graph 200 with a product node describing each of the items. A product node may be linked by an edge to the business providing the product. Where multiple businesses provide a product, each business may have a distinct product node associated with its providing of the product or may each link to the same product node. A product node may be linked by an edge to each user that has purchased, rated, owns, recommended, or viewed the product, with the edge describing the nature of the relationship (e.g., purchased, rated, owns, recommended, viewed, or other relationship). Each of the product nodes may be associated with a graph id and an associated merchant id by virtue of the linked merchant business. Products available from a business may therefore be communicated to a user by retrieving the available product nodes linked to the user node for the business within the social graph 200. The information for a product node may be manipulated by the social-networking system as a product object that encapsulates information regarding the referenced product.

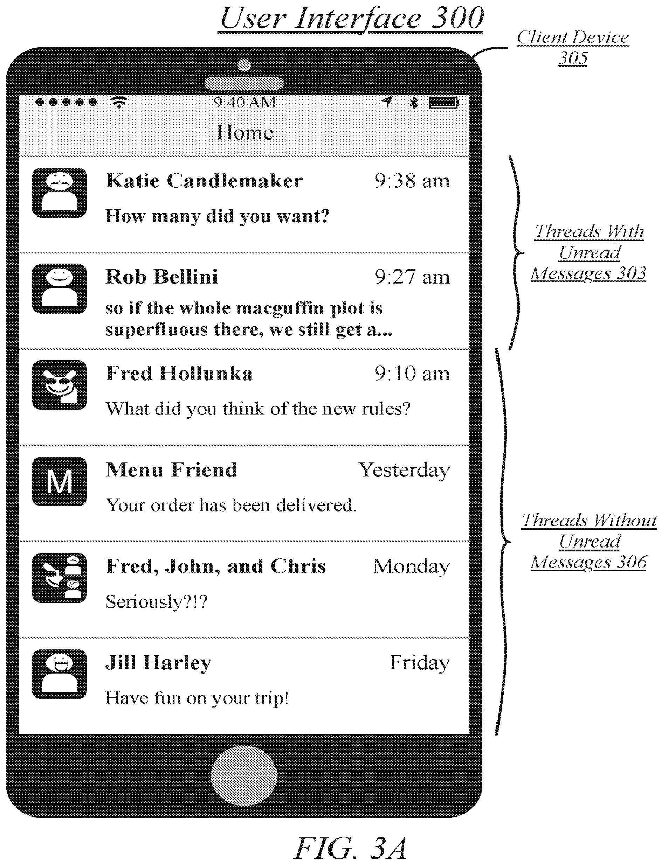

**FIG. 3A** illustrates an embodiment of a user interface 300 for a message thread selection interface.

A client device 305 may correspond to any device used to access a replicated database messaging system 100. While in the illustrated embodiment of FIG. 3A the client device 305 resembles a smartphone device, it will be appreciated that the techniques described herein may be used with any type of device. The user interface 300 may generally correspond to a display of a user inbox for a messaging system involving the replicated database messaging system 100.

The user interface 300 may comprise a display of a plurality of threads in an inbox for a user account. A portion of displayed threads may be threads with unread messages 303. A portion of displayed threads may be threads without unread messages 306. The threads with unread messages 303 may be displayed with a higher prominence than the threads without unread messages 306, such as by placing them in a more prominent position. In the illustrated embodiment of FIG. 3A, the user interface 300 may be scrolled downwards to reveal more threads.

The threads with unread messages 303 may be displayed in a higher position than the threads without unread messages 306, with additional threads without unread messages 306 being viewable by scrolling downwards. In some cases, sufficient threads with unread messages 303 may exist that the threads without unread messages 306 are only visible by scrolling downwards, with the threads with unread messages 303 being sufficient in number to take up all the available screen space in an initial display of an inbox. The display of threads in an inbox may comprise, for each thread, a display of a name of a thread, a last-received or last-exchanged messages in the thread, a preview of the contents of the thread, and an avatar for one or more users in the thread. The name of the thread may correspond to the name(s) of one or more participants in the thread other than the name for the user account for the inbox.

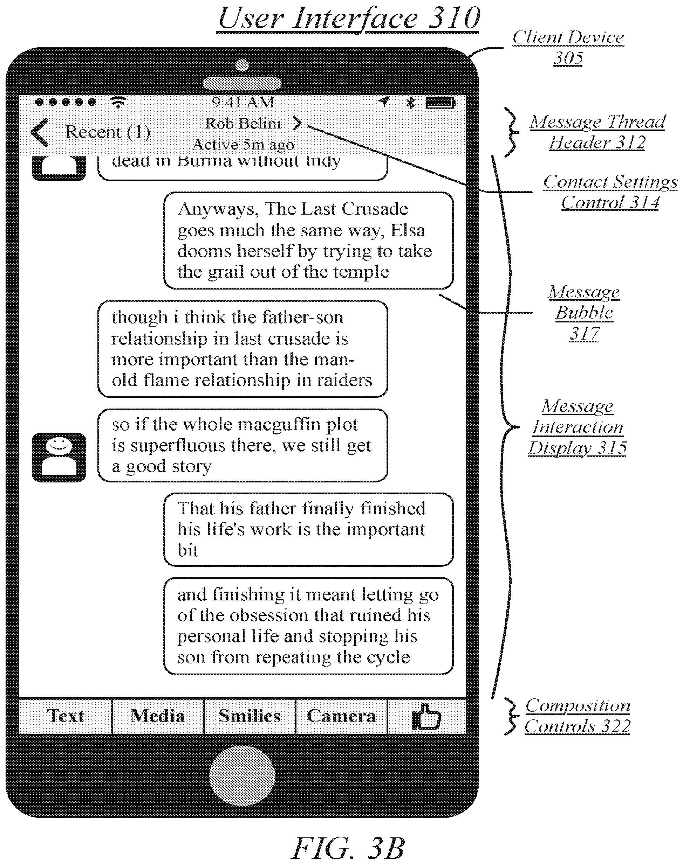

**FIG. 3B** illustrates an embodiment of a user interface 310 for a message thread. The user interface 310 may be displayed on a client device 305.

The user interface 310 may comprise a user interface for a one-on-one message thread. At least a portion of the message exchange for the message thread may be displayed in a message thread interaction display 315. A message thread interaction display 315 may comprise a display of one or more messages exchanged by the users of the one-on-one message thread.

Each of the one or more messages may be represented by a particular message bubble, such as message bubble 316. A message bubble may represent an atomic messaging interaction. A message bubble may generally correspond to a defined geometric area in which the contents of a particular messaging exchange (e.g., text, media) are contained within the defined geometric area. A message bubble may have a distinct color or plurality of colors (e.g., one or more gradients) that distinguish it from a background of a message thread interaction display. A message bubble may have a distinctly-colored border, such as a black outline as depicted, or may have a border defined by the interface between differing colors of the message bubble and the background. In some embodiments, the color or colors of either or both the message bubbles and the background may be customized and configured by users of the display configuration system 100.

The user interface 310 for a message thread may include composition controls 322 that are persistently visible during the display of a message thread. Many, most, or nearly all of the composition controls 322 may empower access to further user interface controls for the performance of various tasks, such as text entry, media selection, emoji selection, camera use, a social approval icon, etc.

The user interface 310 may include a message thread header 312. The message thread header 312 may comprise displays of information and controls relating to the message thread. The message thread header 312 may include a thread title listing one or more other users involved in the thread. The thread title may automatically use the name of a user, such as a full name, short name, or other name registered as the name for use with a particular user for messaging and/or social-networking interactions.

The message thread header 312 may include a contact settings control 314. The contact settings control 314 may provide accessing to a plurality of contact settings relating to the user with which the message thread is associated. The selection of the contact settings control 314 may instantiate a contact settings interface.

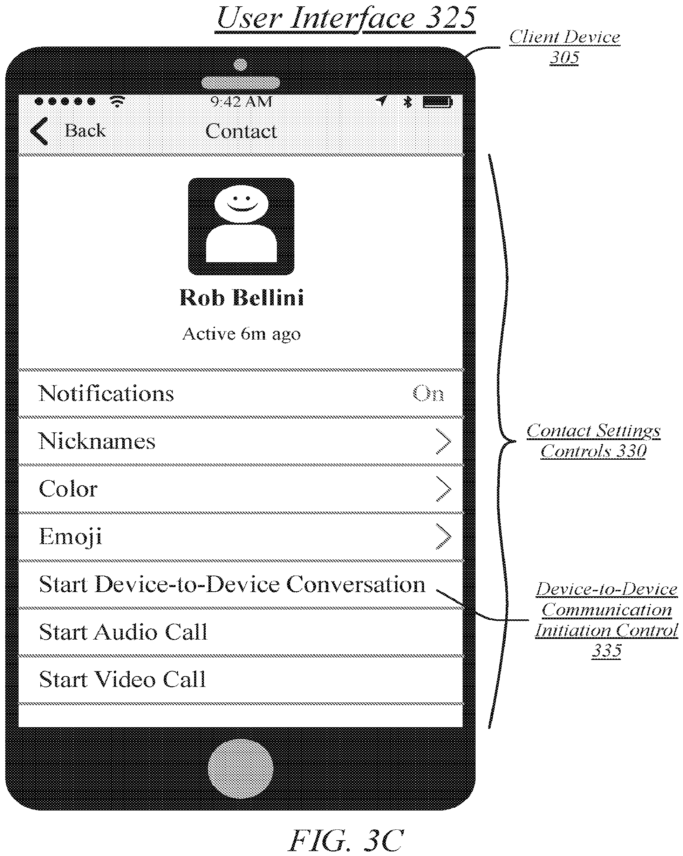

**FIG. 3C** illustrates an embodiment of a user interface 315 for a contact settings interface for a message thread.

The contact settings interface may comprise a plurality of contact settings controls 330 empowering a user to perform an action in relation to a message thread and/or user of the replicated database messaging system 100. The contact settings controls 330 may include a device-to-device communication initiation control 335. The device-to-device communication initiation control 335 may initiate a device-to-device message thread between the client device 305 and a client device with a user contact for the user of the client device 305. The user contact may be a user contact associated with a message thread from which the contact settings interface is reached, such as via the selection of a contact settings control 314 in a message thread interface.

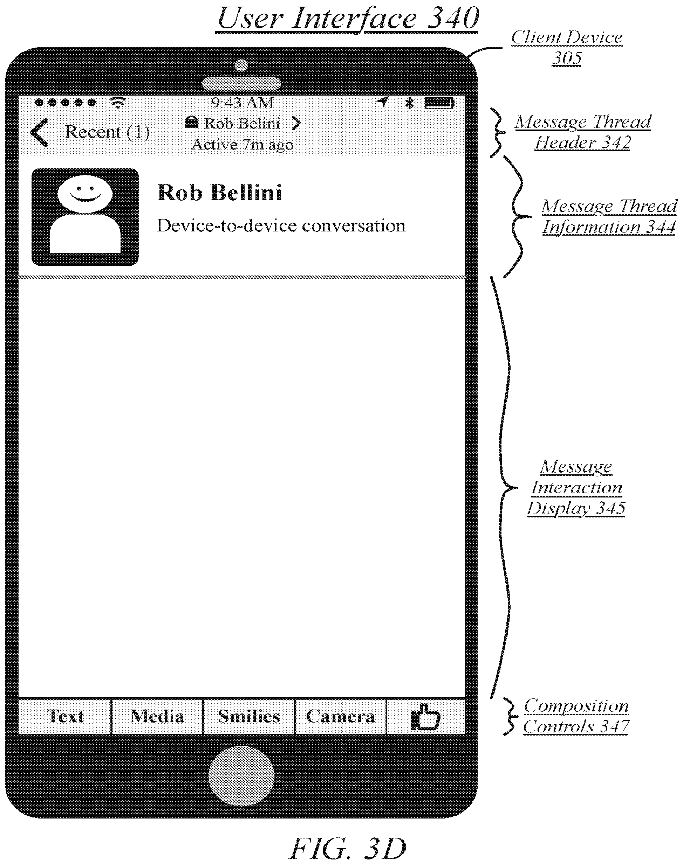

**FIG. 3D** illustrates an embodiment of a user interface 340 for a device-to-device message thread.

The user interface 340 for a device-to-device message thread may include a message thread header 342 substantially similar to a message thread header 312 for a user-to-user message thread. The user interface 340 for the device-to-device message thread may mark a thread title with a symbol or other indicator communicating that the device-to-device message thread is device-to-device rather than user-to-user. Such a symbol may comprise a visual representation of a padlock.

The user interface 340 for the device-to-device message thread may include a display of message thread information 344. The message thread information 344 may include a name and avatar for the user with which the device-to-device message thread is associated. The message thread information 344 may include a label indicating that the message thread is a device-to-device message thread. In some embodiments, the message thread information 344 may eventually be removed from the initial display of a message thread when activated once sufficient messages are received as to occupy its screen space.

The user interface 340 for the device-to-device message thread may comprise a message interaction display 345. The message interaction display 345 may comprise the messages exchanged within the message thread. The message interaction display 345 may be initially empty due to no messages having been exchanged at the time of the creation of the device-to-device message thread.

The user interface 340 for the device-to-device message thread may comprise composition controls 347. The composition controls 347 may generally correspond to the composition controls 322 for a user-to-user message thread. However, in some embodiments, a portion of the user-to-user composition controls 322 may be excluded from the device-to-device composition controls 347 for messaging actions not supported in the device-to-device messaging mode. In some embodiments, additional device-to-device composition controls 347 may be included that are not present in the user-to-user composition controls 322 for messaging action only supported in the device-to-device messaging mode.

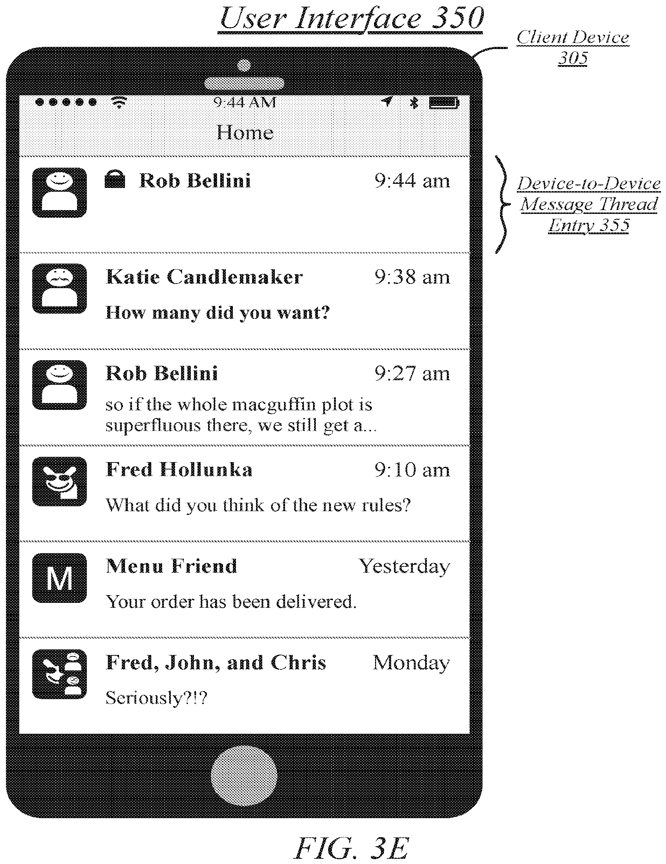

**FIG. 3E** illustrates an embodiment of a user interface 350 for a message thread selection interface with a device-to-device message thread entry 355.

The user interface 350 may correspond to the message thread selection interface updated from the message thread selection interface described with reference to FIG. A in response to the creation of the device-to-device message thread. The user interface 350 may include a device-to-device message thread entry 355 corresponding to the created device-to-device message thread. The device-to-device message thread entry 355 may include a symbol or other indicator communicating that the message thread entry for the messaging inbox represented by the message thread selection interface is a device-to-device message thread. While some message thread entries may comprise a preview of a most-recent message or a preview of a most-recently-received message, the privacy associated with a device-to-device message thread may result in the message thread selection interface excluding such a preview for the device-to-device message thread entry 355. Similarly, notifications displayed outside of a messaging client, such as a notification area for the client device 305, may exclude any previews that would normally be provided in the notification. The replicated database messaging system 100 may selectively include previews for notifications relating to user-to-user messages and exclude previews for notifications relating to device-to-device messages.

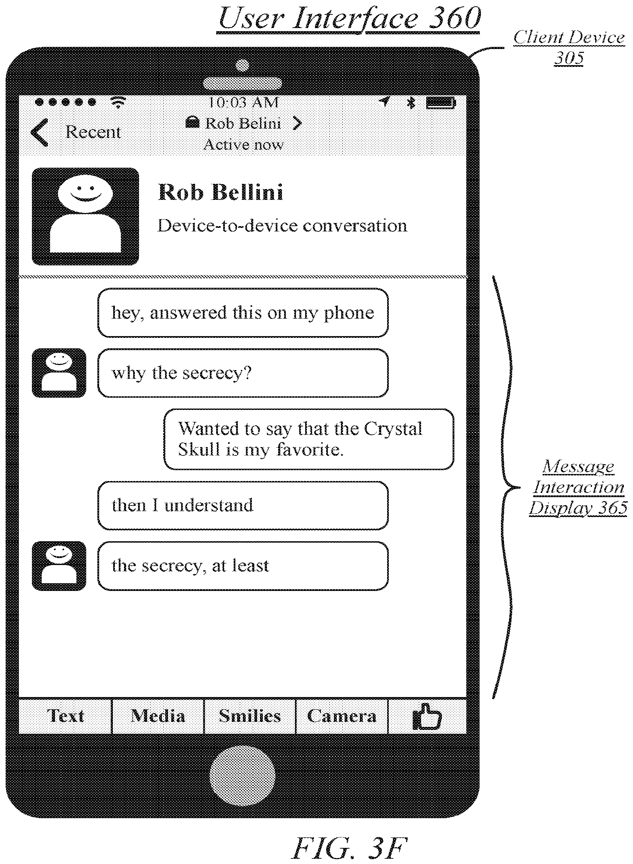

**FIG. 3F** illustrates an embodiment of a user interface 360 for a device-to-device message thread with exchanged device-to-device messages.

The display of the device-to-device message thread may comprise an updated message interaction display 365 comprising messages received in association with the device-to-device message thread. The user interface 360 for the device-to-device message thread may comprise the display of the message thread described with reference to FIG. 3D at a later time.

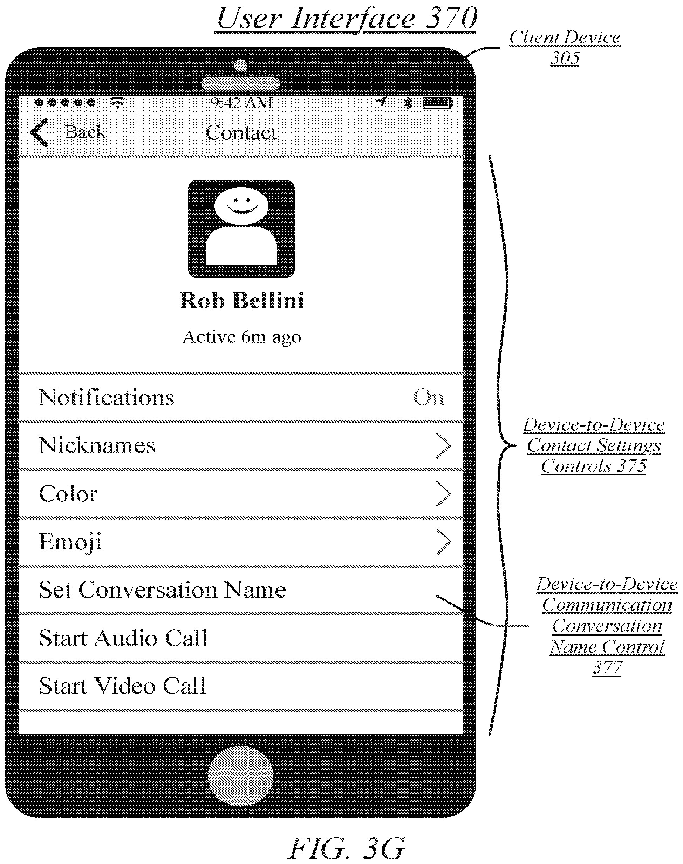

**FIG. 3G** illustrates an embodiment of a user interface 370 for a device-to-device contact settings interface for a device-to-device message thread.

The contact settings interface for a device-to-device message thread may comprise a plurality of contact settings controls 375. At least a portion of the plurality of contact settings controls 375 may be the same as the plurality of contact settings controls 330 for a user-to-user message thread as described with reference to FIG. 3C. The contact settings interface for the device-to-device message thread may be reached via a contact settings control for the user interface for the device-to-device message thread.

The plurality of contact settings controls 375 may comprise a device-to-device communication conversation name control 377. The device-to-device communication conversation name control 377 may assign or modify a name assigned to the device-to-device message thread. Selecting the device-to-device communication conversation name control 377 may instantiate a text-entry interface for entering a name for assignment to the device-to-device message thread. Once assigned to the device-to-device message thread, the conversation name may be displayed in association with displays of the device-to-device message thread.

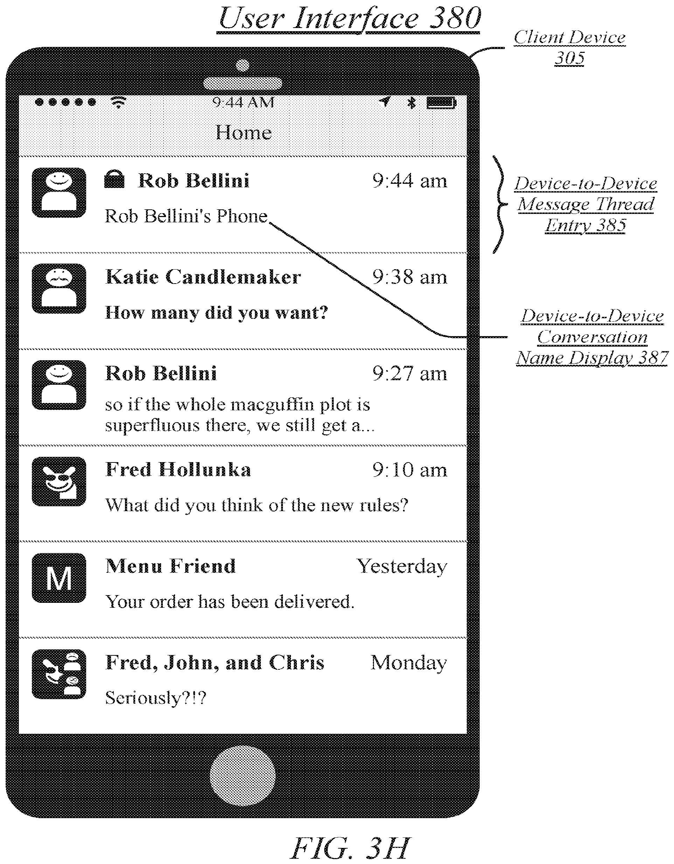

**FIG. 3H** illustrates an embodiment of a user interface 380 for a message thread selection interface with a device-to-device message thread entry 385 with a customized device-to-device conversation name display 387.

The user interface 380 for the message thread selection interface may correspond to the user interface 350 for the message thread selection interface described with reference to FIG. 3E at a later time after the exchange of messages as described with reference to FIG. 3F. As such, the device-to-device message thread entry 385 may be updated to indicate the time of the most-recently exchanged message or most-recently received message.

The user interface 380 for the message thread selection interface may correspond to the user interface 350 for the message thread selection interface described with reference to FIG. 3E at a later time after the use of a device-to-device communication conversation name control 377 to set a name for the device-to-device message thread. As such, the device-to-device message thread entry 385 may now comprise a device-to-device conversation name display 387 comprising a device-to-device conversation name set by the user of the client device 305. This device-to-device conversation name display 387 may be used to replace the preview of a message thread used for user-to-user message threads.

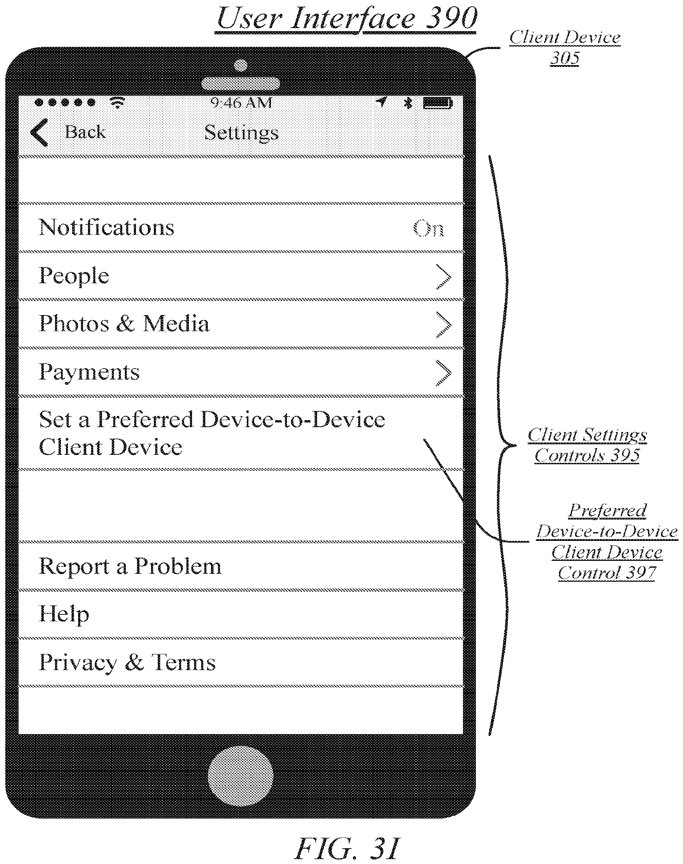

**FIG. 3I** illustrates an embodiment of a user interface 390 for a messaging client settings interface with a preferred device-to-device client device control 397.

The plurality of client settings controls 395 may comprise a plurality of controls configuring a messaging client on the client device 305. The messaging client settings interface for the messaging client may be reached via a messaging client settings control for a user interface for the messaging client.

The plurality of client settings controls 395 may comprise a preferred device-to-device client device control 397. The preferred device-to-device client device control 397 may assign a particular device, such as the current client device 305, as a preferred client device for device-to-device communication. In some embodiments, the preferred device-to-device client device control 397 may empower the setting of any client device associated with a user account being configured to be set as the preferred device-to-device client device. In other embodiments, the preferred device-to-device client device control 397 may only empower the client device upon which the control is activated to be set as the preferred device-to-device client device. In some embodiments, the preferred device-to-device client device control 397 may be used to remove a configuration of the current client device as the preferred device-to-device client device, with the replicated database messaging system 100 enforcing that a current preferred device-to-device client device be used to authorize a change in the preferred device-to-device client device.

A client device being set as the preferred device-to-device client device may configure the replicated database messaging system 100 to direct any subsequent device-to-device invitations for additional device-to-device message threads to the preferred device-to-device client device. In some embodiments, in addition, existing device-to-device message threads for the user account may be migrated to the client device configured as the preferred device-to-device client device. In some embodiments, migration of existing device-to-device message threads for the user account may comprise a migration of the existing messages. In other embodiments, migration of existing device-to-device message threads for the user account may comprise a reassignment of the destination of subsequent messages with device-to-device message threads to the configured preferred device-to-device client device, with existing messages within those device-to-device message threads remaining on the client device on which they are currently stored.

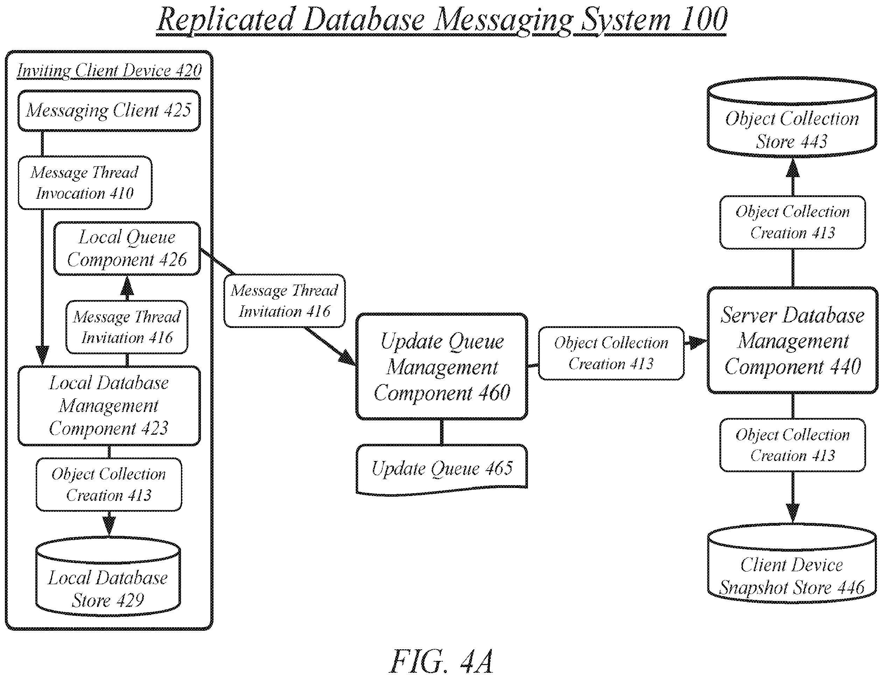

**FIG. 4A** illustrates an embodiment of the replicated database messaging system 100 registering a message thread invitation 416 from an inviting client device 420.

The replicated database messaging system 100 may comprise a plurality of components. In some embodiments, these plurality of components may be distributed among a plurality of servers. In other embodiments, a single server may implement the plurality of components. In some embodiments, a plurality of servers may be executed by a single server device. In other embodiments, the plurality of servers may be executed by a plurality of server devices. In some embodiments, multiple instances of the various components and various servers may be executed to provide redundancy, improved scaling, and other benefits. Similarly, a client device may execute a plurality of components as part of a local application.

A client device may communicate with other devices using wireless transmissions to exchange network traffic. Exchanging network traffic, such as may be included in the exchange of messaging or database synchronization transactions, may comprise sending and receiving network traffic via a network interface controller (NIC). A NIC comprises a hardware component connecting a computer device, such as client device, to a computer network. The NIC may be associated with a software network interface empowering software applications to access and use the NIC. Network traffic may be received over the computer network as signals transmitted over data links. The network traffic may be received by capturing these signals and interpreting them. The NIC may receive network traffic over the computer network and send the network traffic to memory storage accessible to software applications using a network interface application programming interface (API). The network interface controller may be used for the network activities of the embodiments described herein, including the interoperation of the clients and servers through network communication. For example, a client device sending or receiving messages to or from a server may be interpreted as using the network interface controller for network access to a communications network for the sending or receiving of information.

The replicated database messaging system 100 may be operative to replicate a database between multiple devices, such as an inviting client device 420 and one or more other devices, which may include one or more other client devices and/or one or more server devices. The replicated database messaging system 100 may include a database synchronization server system 110 providing transport for the replication of a local client database between devices.

An inviting client device 420 may comprise a local database store 429. The local database store 429 may store application data using database semantics. The local database store 429 may store general application-defined objects using a binary format operative to be used by any application object structure. Objects may be organized into collections, wherein a collection bundles together related objects. Each collection may be identified by a unique collection identifier. Each object may be identified within a collection using one or more keys. The one or more keys may be assigned to an object on writing and used to retrieve the object when reading. An object may be associated with a primary key, wherein the primary key is unique within the collection namespace of a collection. An object may be associated with a sorting key, which may or may not be unique or distinct from other keys. The sorting key may place an ordering on the objects within a collection so as to empower an ordered retrieval of objects within the collection. In some embodiments, a collection may be specified as having one or more object fields to be used as additional sorting values. Where specified, the specified one or more object fields may be used as sorting keys on retrieval. This may be empowered by using a standardized binary format for the representation of an object so that the fields of the object may be read.

In one case, an application object may comprise a message for a messaging system. The primary key may comprise a message identifier for the message, such as a unique message identifier within a namespace for the messaging system. The sort key may comprise a timestamp for the message, so that messages may be retrieved in timestamp order using the sort key.

An update queue 465 may queue - store and place an ordering on - a plurality of updates. The update queue 465 may comprise a representation of updates in a strict linear order. The update queue 465 may be organized as a data unit according to a variety of techniques. The update queue 465 may be stored in semi-persistent memory, persistent storage, both semi-persistent memory and persistent storage, or a combination of the two. The update queue 465 may be organized according to a variety of data structures, including linked lists, arrays, and other techniques for organizing queues. The update queue 465 may generally comprise a first-in-first-out (FIFO) queue in which no update will be removed or retrieved from the queue before any updates that were received prior to it. The update queue 465 may be managed by an update queue management component 460.

In some embodiments, an update queue 465 may be specifically associated with the user of inviting client device 420, such as by being uniquely associated within the replicated database messaging system 100 with a user account for the user of inviting client device 420. The update queue 465 may be a single queue used for all client devices used by this user. In these embodiments, each user of the replicated database messaging system 100 may have an update queue associated with their account, this update queue used to send updates to one or more client devices for that user. These updates may include database replication updates, messaging updates, and/or any other type of updates.

In some embodiments, an update queue 465 may be specifically associated with a particular object collection. The update queue 465 may be a single queue used for all client devices with a local store for the object collection. This may include both multiple client devices for a single user and multiple client devices associated with multiple different users of the replicated database messaging system 100. In these embodiments, each object collection replicated by the replicated database messaging system 100 may have an update queue associated with it, this update queue used to send updates to one or more client devices for one or more users of the replicated database messaging system 100. These updates may include database replication updates, messaging updates, and/or any other type of updates. As such, in some cases, a plurality of client devices may be subscribed to the collection update queue 465, where two or more client devices of the plurality of client devices are associated with distinct user accounts for the database synchronization system.

The inviting client device 420 may comprise a plurality of components. The components may comprise elements of a local application executing on the inviting client device 420. The local application may comprise, without limitation, a messaging application and/or a social-networking application. In some embodiments, the database replication may be performed for a local database store 429 exclusively used by the local application of which the components are an element. In other embodiments, the database replication may be performed for a local database store 429 used by a plurality of applications on the inviting client device 420.

The inviting client device 420 may comprise a local queue component 426. The local queue component 426 may be generally arranged to manage a local incoming queue and a local outgoing queue of updates arriving at and leaving, respectively, the inviting client device 420. The local queue component 426 may receive updates from the update queue 465 and add updates to the update queue 465.

The inviting client device 420 may comprise a local database management component 423. The local database management component 423 may be generally arranged to provide read and write access to the local application comprising the local queue component 426 and local database management component 423 and/or to other local applications using the local database store 429 and replicated database messaging system 100. The local database management component 423 may perform interactions with the servers of the replicated database messaging system 100 other than the performance of queue operations.

The inviting client device 420 may comprise a messaging client 425. The messaging client 425 may comprise or interact with the local database management component 423 and/or the local queue component 426.

In some embodiments, the database synchronization system comprising a database synchronization server system 110 and a request to the database synchronization system may comprise a request to the servers of the database synchronization server system 110. In other embodiments, the database synchronization system may be a peer-to-peer client system and a request to the database synchronization system may comprise a peer-to-peer request to other devices between which the local database store 429 is replicated.

A database synchronization server system 110 may comprise a server database management component 440. The server database management component 440 may be generally arranged to coordinate synchronization operations with the local database management component 423 and the servers of the database synchronization server system 110. The server database management component 440 may maintain the currency for the object collections for the inviting client device 420.

An object collection store 443 may store the current or a recent state for all of the object collections supported by the replicated database system 100. In many cases, the object collection store 443 will store the most recent state for the object collections. However, in some cases, some update may still be in transit, such as in a local queue on a client device or in an update queue and not yet retrieved by the server database management component 340 and stored in the object collection store 443. A client device snapshot store 446 may store a copy of the local data in the local database store 429 for each supported client device. The client device snapshot store 446 may be used to perform consistency and integrity operations for client devices such as inviting client device 420.

In embodiments in which messages are migrated between client devices after a configuration of a preferred device-to-device client device, the messages may be migrated by retrieving message objects for the messages from the migrated device-to-device message thread(s) from the object collection store 443 and sending the message objects to the configured preferred device-to-device client device. Alternatively, the messages may be migrated by retrieving a snapshot of one or more device-to-device messages threads from the client device snapshot store 463 and sending the snapshot to the preferred device-to-device client device. In another alternative, migrated messages may be retrieved as message objects from the one or more client devices storing the message objects and sent to the configured preferred device-to-device client device, such as may be used where message objects for device-to-device communication are not persistently stored in the object collection store 443 or client device snapshot store 463. Where the message objects are retrieved from one or more client devices, the message objects may either be sent directly peer-to-peer between the client devices or the sending may be mediated by one or more servers, such as may include one or more update queues.

The messaging client 425 may be authenticated with the replicated database messaging system 100 for a user account for the user of the inviting client device 420. The user of the messaging client 425 may invoke a message thread invocation 410 using a user interface for the messaging client 425. The message thread invocation 410 may specify an invited user account for the invitation to engage in device-to-device communication. The invited user account may be associated with one or more invited client devices.

The messaging client 425 may display a user-to-user message thread display on the inviting client device 420. This user-to-user message thread display may be associated with a user-to-user message thread between an inviting user account and an invited user account. The user-to-user message thread display may include a device-to-device message thread invocation control. The messaging client 425 may receive a user activation of the device-to-device message thread invocation control in association with the user-to-user message thread display. The messaging client 425 may send a device-to-device messaging communication invitation to the invited user account in response to receiving the user activation of the device-to-device message thread invocation control.

The device-to-device messaging communication invitation may comprise a message thread invitation 416 to a device-to-device message thread created for the purpose of engaging in device-to-device communication. The messaging client 425 may send a message thread invocation 410 to the local database management component 423. The local database management component 423 may instantiate an object collection to store the device-to-device message thread with an object collection creation 413 with the local database store 429. The object collection may comprise a device-to-device messaging object collection storing messaging objects encapsulating the device-to-devices messages exchanged in the device-to-device message thread.

An object collection identifier for the created object collection for the device-to-device message thread may be generated by the local database management component 423 and included in a message thread invitation 416 passed to a local queue component 426. The message thread invocation 410 may be augmented with the object collection identifier to form a message thread invitation 416 to the device-to-device message thread. The object collection identifier may empower an invited client device to address messages to the inviting client device 420. The object collection identifier may be uniquely associated as a destination address with the inviting client device 420 across a namespace for the replicated database messaging system 100.

The message thread invitation 416 may be passed to the update queue management component 460 via an outgoing queue managed by the local queue component 426. The message thread invitation 416 may pass through the update queue 465 and then be processed by the server database management component 440. The server database management component 440 may perform an object collection creation 413 with the object collection store 443 to record the addition to the overall object creation library of the replicated database messaging system 100. Similarly, the object collection creation 413 may be performed with the client device snapshot store 446 to reflect that the inviting client device 420 has an additional object collection in its local database store 429.

In some cases, a message thread invitation 416 may be initiated in response to an inviting client device 420 having an outgoing message associated with an existing device-to-device message thread be rejected by the replicated database messaging system 100. The inviting client device 420 and an invited-user-account client device associated with an invited user account may have an existing device-to-device message thread. The invited user account may configure a client device other than the client device with the existing device-to-device message thread as a preferred device-to-device client device. Once this configuration is performed, the replicated database messaging system 100 may reject an outgoing message from the inviting client device 420 in association with the existing device-to-device message thread in response to the configuration of a different client device for the invited user account being configured as the preferred device-to-device client device. This rejection may be performed by the server database management component 440 or update queue management component 460 discarding an outgoing message object for the outgoing message from the inviting client device 420 and responding to the outgoing message with an instruction to reconfigure the existing device-to-device message thread to perform further communication with the configured preferred device-to-device client device.

The inviting client device 420 may therefore use the message thread invitation 416 to establish device-to-device communication between the inviting client device 420 and the preferred device-to-device client device. Once this device-to-device communication is established, the display of the existing device-to-device message thread may transition to using this established replacement device-to-device communication so as to preserve a continuity of experience for the user of the inviting client device 420. However, the configuration information for the device-to-device message thread will be the configuration information for the established replacement device-to-device communication. As such, once the replacement device-to-device communication is established, the configuration information for the previous client device for the invited user account may be discarded and replaced with the configuration information for the configured preferred device-to-device client device. Further, once the replacement device-to-device communication is established, the outgoing message from the inviting client device 420 that was dropped may then be sent to the preferred device-to-device client device by the inviting client device 420, this time using the configuration information for the replacement device-to-device communication. In some cases, this resending may be automatically performed. In other cases, this resending may only be performed based on the reception of an explicit resending commanding from the user of the inviting client device 420 so as to empower the sending user to discriminate as to the client device of the invited user that they send messages to. In either case, the user of the inviting client device may be displayed a notification in the device-to-device message thread that the message thread will now be associated with the preferred device-to-device client device and that subsequent messages sent and received in association with the device-to-device message thread are being sent and received in association with the configured preferred device-to-device client device.

In some cases, a device-to-device message thread invocation control for a message thread may be deactivated where the user account with which the message thread is associated lacks a client device supporting device-to-device messaging communication. The replicated database messaging system 100 may maintain a registry of whether client devices support various features, which may be determined based on, for instance, the installed version of a messaging client on the client devices. The aggregated supported features for the client devices associated with a user account may comprise supported features of the user account. Where none of the client devices associated with a user account supports device-to-device messaging using the replicated database messaging system 100, the registry may indicate that the second user account lacks device-to-device messaging support. The messaging client 425 may retrieve a device-to-device messaging support setting for the user account for a user-to-user message thread and determine whether it indicates that the user account lacks device-to-device messaging support. Where the device-to-device messaging support setting indicates that the user account lacks device-to-device messaging support, the device-to-device message thread invocation control for the message thread is deactivated.

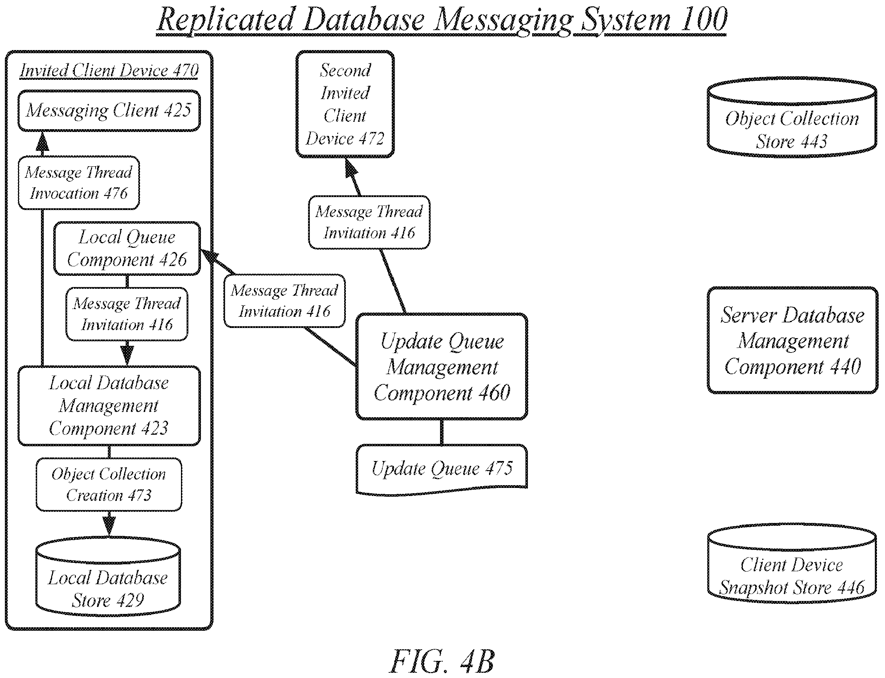

**FIG. 4B** illustrates an embodiment of the replicated database messaging system 100 forwarding a message thread invitation 416 to an invited client device 470 and a second invited client device 472.

The message thread invitation 416 may be queued for transmission in an update queue 475 for sending to each client device associated with the invited user account. The message thread invitation 416 may be queued for a plurality of invited client devices, including a first invited client device 470 and a second invited client device 472. In some cases, multiple invited client devices may retrieve the message thread invitation 416. One or more client devices may therefore receive a device-to-device messaging communication invitation, the device-to-device messaging communication invitation a message thread invitation 416 to a device-to-device message thread. The message thread invitation 416 may be received as invitation object, the invitation object specifying a inviting-client-device-specific message object collection using a collection identifier identifying the message object collection created on the inviting client device 420 for the delivery of device-to-device message objects.

In some embodiments, an inviting-client-device-specific message object collection may be specific to the specific device-to-device message thread being invoked. In other embodiments, the inviting client device 420 may use a single inviting-client-device-specific message object collection as the destination for all device-to-device messages associated with the inviting client device 420.

In some cases, such as where a preferred device-to-device client device is configured for an invited user account, the message thread invitation 416 may be exclusively directed to the preferred device-to-device client device. As such, the replicated database managing system 100 may refrain from sending the message thread invitation 416 to any other client device for the invited user account.

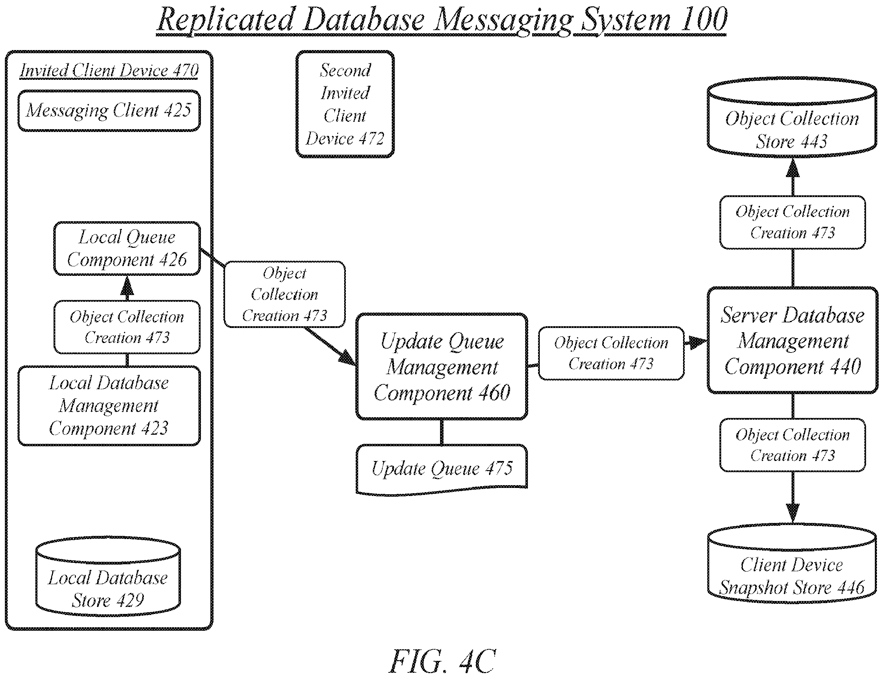

**FIG. 4C** illustrates an embodiment of the replicated database messaging system 100 processing an object collection creation 473.

A device-to-device messaging communication invitation may be bound to a first client device receiving user activity in association with the user account of the client devices associated with the invited user account. This user activity may correspond to a user activation of a messaging client 425. As such, an invitation may be bound to the first client device associated with an invited user account that has received the invitation and been activated (e.g., brought to the foreground on the client device) by the user. However, in some embodiments, a user may be empowered to select which client device accepts the invitation. For instance, the invitation may be displayed on a plurality of client devices, with the user affirmatively accepting the invitation on the client device of their choice, such as through the activation of an invitation acceptance control. As such, an invited client device 470 may accept the device-to-device messaging communication invitation in response to receiving the device-to-device messaging communication invitation on the invited client device 470 and the messaging client 425 being activated in the foreground on the invited client device 470.

The messaging client 425 may generate a device-to-device message thread entry in a messaging inbox display on the invited client device 470 in response to receiving the device-to-device messaging communication invitation and accepting the device-to-device messaging communication invitation. In some cases, a user may specify a user message thread name for the message thread between the invited client device 470 and inviting client device 420. The messaging client 425 may receive a user message thread name for the device-to-device message thread from the user. The messaging client 425 may therefore display the user message thread name in association with the device-to-device message thread entry in the messaging inbox display on the invited client device 470.

The messaging client 425 may display a device-to-device message thread entry in a messaging inbox display on the invited client device 470, with this device-to-device message thread entry for the device-to-device message thread between the invited client device 470 and the inviting client device 420. This device-to-device message thread entry may be displayed separately and in combination with a user-to-user message thread entry for a user-to-user message thread between the invited user account for the invited client device 470 and the inviting user account for the inviting client device 420. Further, other device-to-device message threads may be invoked between a client device and other client devices belonging to the same user. As such, the messaging client 425 may display a second device-to-device message thread entry in a messaging inbox display on the invited client device 470, the second device-to-device message thread entry for a second device-to-device message thread between the invited client device 470 and an other client device associated with the inviting user account, the other client device distinct from the inviting client device 420.

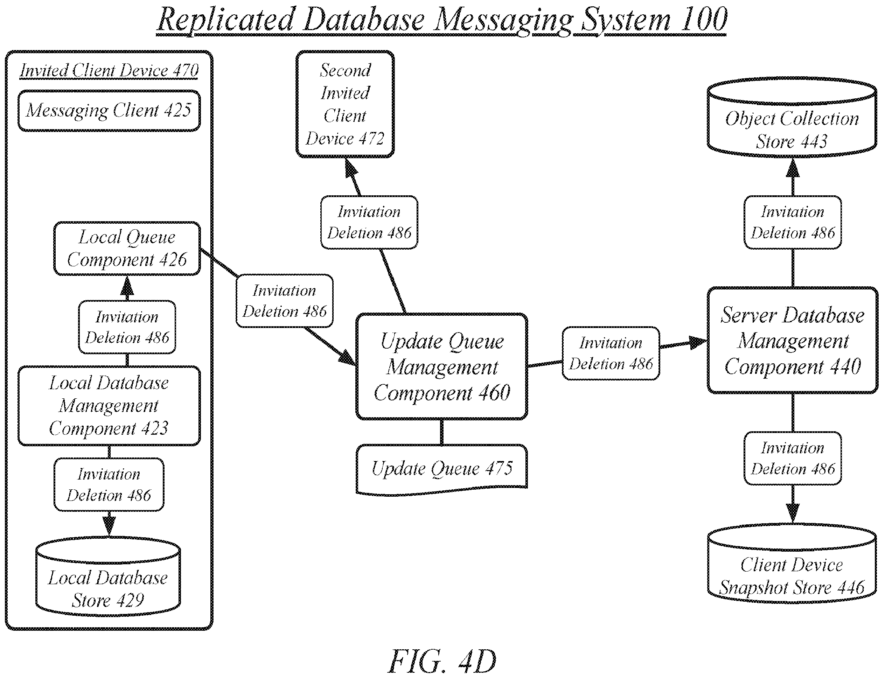

**FIG. 4D** illustrates an embodiment of the replicated database messaging system 100 processing an invitation deletion 486 in response to the acceptance of a message thread invitation by an invited client device 470.

Once the invited client device 470 that accepts the device-to-device messaging communication invitation accepts the invitation, the invited client device 470 may cause the invitation to be deleted from the other client devices associated with the invited user account. The local database management component 423 may perform an invitation deletion 486 on the local database store 429, which may be performed based on instructions from the messaging client 425.

The local database management component 423 may delete an invitation object in response to receiving the device-to-device messaging communication invitation, wherein deleting the device-to-device messaging communication invitation is operative to delete the invitation object from one or more other client devices associated with the invited user account. The local database management component 423 may instruct the local queue component 426 to queue an invitation deletion 486 to update the state of the database store on other devices. The local queue component 426 may send the invitation deletion 486 to the update queue management component 460, which may be distributed via the update queue 475 to other devices, including one or more other invited client devices and the object collection store 443 and client device snapshot store 446 as managed by the server database management component 440. The deletion of the invitation from a second invited client device 472 may thereby prevent the second invited client device 472 from accepting the invitation, thereby establishing that the first invited client device 470 is the unique invited client device bound in the invited device-to-device messaging communication.

The invited client device 470 may also establish a device-to-device message object collection substantially similar to the device-to-device message object collection established by the inviting client device 420 for delivery of message objects to the inviting client device 420. The invited client device 470 may send a collection identifier for its device-to-device message object collection to the inviting client device 420 to empower the inviting client device 420 address messages to the invited client device 470.

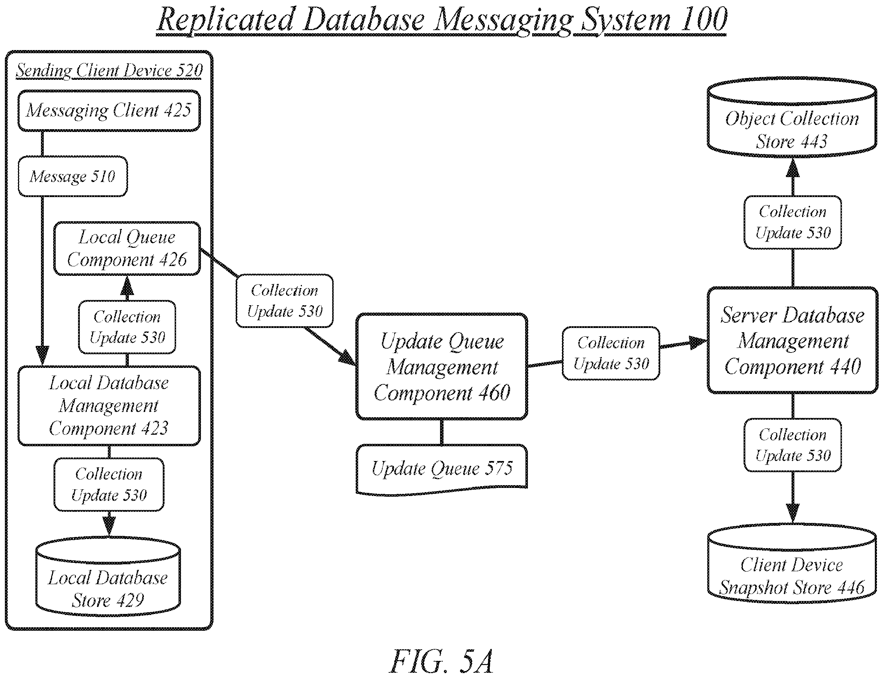

**FIG. 5A** illustrates an embodiment of the replicated database messaging system 100 processing a message 510 sent from a sending client device 520.

The sending client device 520 may correspond to either of the invited client device 470, inviting client device 420, or any other client device operating within the replicated database messaging system 100.

The device-to-device messaging communication between a sending client device 520 and a receiving client device may be embodied in a device-to-device message thread. The messaging client 425 on the sending client device 520 may receive a messaging composition interaction via a user interface for the device-to-device message thread. This messaging composition interaction may comprise a user specification of a user message 510 and a request to send the user message 510 within the device-to-device message thread and therefore to a receiving client device.

The local database management component 423 may receive the message 510 and generate a device-to-device message object comprising the user message. The local database management component 423 may perform a collection update 530, wherein the collection update 530 updates the state of the local database store 429 to contain the device-to-device message object. The local database management component 423 may write the device-to-device message object to a recipient-client-device-specific message object collection. This second-client-device-specific message object collection is replicated to the second client device by the database synchronization system.

To perform the replication of the second-client-device-specific message object collection to the second client device by the database synchronization system, the local database management component 423 may instruct the local queue component 426 to queue the collection update 530 to an outgoing queue for the sending client device 520. The local queue component 426 may queue the collection update 530 and send the collection update 530 to the update queue management component 460 when network connectivity to the database synchronization server system is available where it is queued in an update queue 575 associated, depending on the embodiment, with an object collection store associated with delivery to the receiving client device or with the sending client device 520. The update queue management component 460 may then queue the collection update 530. The collection update 530 may be stored in the object collection store 443 and client device snapshot store 446 by the server database management component 440.

The message collection update 530 may be associated with a primary key and a sorting key assigned to the device-to-device message object. The primary key may comprise a message identifier. The sorting key may comprise a timestamp for the message collection update 530. A message collection update 530 embodying a device-to-device message may comprise one or more of a text message, an image, a video, a voice call initiation request, and a video call initiation request. A call initiation request may empower a receiving client device to engage in a device-to-device call, which may comprise audio and/or video communication.

The device-to-device message object may be subject to a spam detection process by the database synchronization system. This spam detection process may be based on one or more of send rate, type-specific send rate, and database synchronization system protocol compliance. Send rate may be tracked and analyzed to determine whether the send rate exceeds a send-rate threshold, with the send-rate threshold defined to detect behavior indicative of unwanted messaging. Type-specific send rates may be tracked and analyzed to determine whether type-specific send rates exceed a type-specific send rate threshold. A type may include, for instance, an invitation, a device-to-device message, or other type. Database synchronization system protocol compliance may correspond to the accuracy with which communication from a messaging client 425 meets a protocol for the replicated database messaging system 100. Failure to meet protocol compliance may indicate the use of a third-party messaging client, which may indicate a greater risk of unwanted messaging. Devices filing database synchronization system protocol compliance may be subject to lower threshold for send rate or type-specific send rate thresholds.

The replicated database messaging system 100 may provide for abuse reporting. A participant in a device-to-device conversation may voluntarily notify the replicated database messaging system 100 of abusive content or otherwise abusive communication. These reports may be used, possibly in combination with other signals, to identify abusive users of the replicated database messaging system 100. Where a user reports another as abusive, that reported user may be prevented from contacting the reporting user using the replicated database messaging system 100. Where a user has been determined to be an abusive user, that user may be completely blocked from using the replicated database messaging system 100, such as through a deactivation of their user account.

An abuse report may be enacted through the use of a abuse report control, which may be displayed in a device-to-device message thread interface. The activation of the abuse report control may instantiate an abuse reporting interface. The abuse reporting interface may empower a reporting user to indicating the nature of the abuse, such as commercial spam, offensive or threatening content, or any other type of unwanted messaging communication. The abuse reporting interface may empower the reporting user to include one or more messages with the report that the user is flagging as being abusive content. In some embodiments, the replicated database messaging system 100 may refrain from analyzing or otherwise examining the contents of messages exchanged via database replication except where a user specifically indicates that a message should be examined, such as through flagging the message using the abuse reporting process. The replicated database messaging system 100 may verify that a message flagged as abusive originated with a sending user account by signing messages in association with their sending user account and then, upon an abuse reporting, determining whether the reported messages were signed for that user account.

Some messages may contain media attachments, such as images, animated images, sounds, videos, stickers, etc. In some cases, a particular media attachment may be used for multiple messages. For instance, a sticker image may be used multiple times in a given message thread or in multiple message threads. A message object may represent the media attachment using an identifier for the media attachment. This identifier may be used to perform a retrieval with the local database store 429 to retrieve the media attachment. In some embodiments, the local database management component 423 may dynamically retrieve media attachments from a media server in response to a media retrieval using the media identifier where the media is not already present on the client device. In some embodiments, the server database management component 440 may preemptively load media for a message onto the client device based on detecting that the media is referenced in the message and not present on the client device. The server database management component 440 may determine that media is not present on the client device based on the object collection store 443 and/or the client device snapshot store 446. The server database management component 440 may determine whether the object collection on the client device already contains an instance of the media, such as by determining whether a client device snapshot contains an instance of the media, and send an instance of the media to the client device as an update via an update queue where the client device does not already contain an instance of the media.

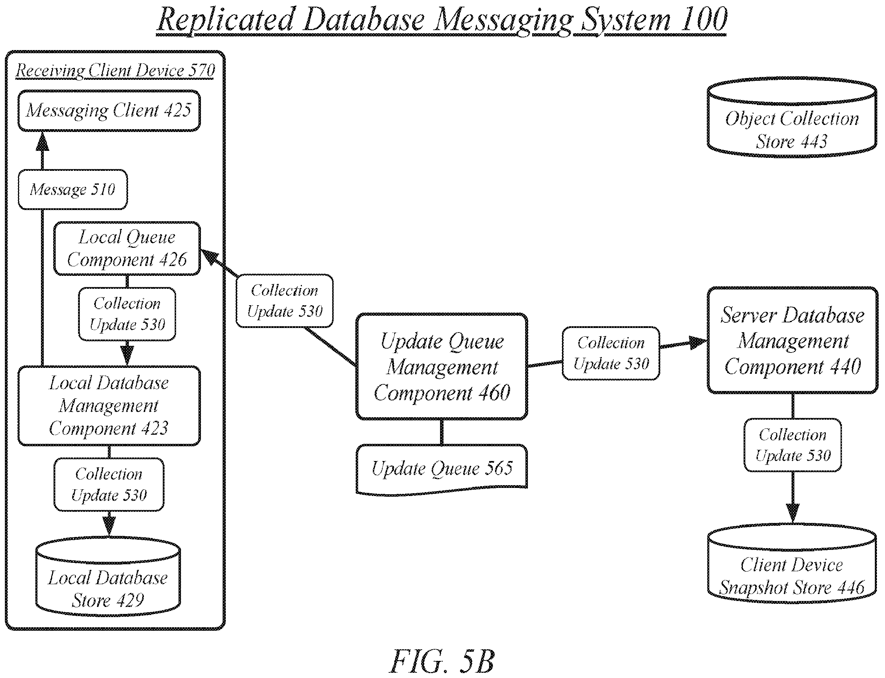

**FIG. 5B** illustrates an embodiment of the replicated database messaging system 100 sending a collection update 530 to a receiving client device 570.

The receiving client device 570 may correspond to either of the invited client device 470, inviting client device 420, or any other client device operating within the replicated database messaging system 100.

In some embodiments, the collection update 530 may be passed to an update queue 565 for the receiving client device 570 from the update queue 575 for the sending client device 520. In other embodiments, the first update queue 565 and second update queue 575 may be the same update queue, with this update queue associated with the object collection store for the delivery of device-to-device messages for the receiving client device 570. The collection update 530 may also be stored in the client device snapshot store 446 for the client device snapshot associated with the receiving client device 570.

The local queue component 426 of the receiving client device 570 may receive the message collection update 530 from the database synchronization system via the update queue 565 for the database synchronization system. This message collection update 530 is for the message object collection associated with device-to-device messaging communication between the sending client device 520 and the receiving client device 570. The message object collection may comprise a plurality of device-to-device message objects, wherein each of the plurality of device-to-device message objects is addressed to the receiving client device 570. The local queue component 426 may pass the collection update 530 to the local database management component 423. The local database management component 423 may then update a local database store 429 for the message object collection on the receiving client device 570 using the collection update 530. Updating the local database store may be based on a collection identifier for the message collection update 530 identifying a particular messaging object collection. Updating the local database store may comprise applying the collection update 530 as a diff to the existing state of the local database store 429.

The local database management component 423 may extract a device-to-device message 510 from the message collection update 530 and pass the message 510 to the messaging client 425, thereby empowering the messaging client 425 to display the device-to-device message 510 on the receiving client device 570. The messaging client 425 may display the device-to-device message 510 in a device-to-device message thread display.

The local database management component 423 may retrieve device-to-device configuration information specific to the device-to-device messaging communication between the sending client device 520 and the receiving client device 570. The local database management component 423 may extract the device-to-device message 510 from the message collection update 530 based on the device-to-device configuration information. The device-to-device configuration information may comprise, for instance, security information authorizing the receiving client device 570 to access the device-to-device message 510.

In some cases, a user may delete a device-to-device message thread. The configuration information for the device-to-device message thread may be discarded when the device-to-device message thread is deleted. The messaging client 425 may receive a user delete command for the device-to-device message thread and delete the device-to-device configuration information specific to the device-to-device messaging communication between the sending client device 520 and the receiving client device 570 in response to receiving the user delete command for the device-to-device message thread.

In some cases, device-to-device messages within a device-to-device message thread may be ephemeral messages. Ephemeral messages may be deleted after the passing of a defined period of time. In some cases, all device-to-device messages may be ephemeral messages. In other cases, device-to-device messages may be ephemeral messages when a device-to-device message thread is set to be ephemeral or is in an ephemeral mode. In any of these cases, the messaging client 425 may delete the device-to-device message from the receiving client device 570 after the extinction of a message display timer. The message display timer may track from one of a sending time for the device-to-device message, a receiving time for the device-to-device message, and a viewing time for the device-to-device message, without limitation.

Included herein is a set of flow charts representative of exemplary methodologies for performing novel aspects of the disclosed architecture. While, for purposes of simplicity of explanation, the one or more methodologies shown herein, for example, in the form of a flow chart or flow diagram, are shown and described as a series of acts, it is to be understood and appreciated that the methodologies are not limited by the order of acts, as some acts may, in accordance therewith, occur in a different order and/or concurrently with other acts from that shown and described herein. For example, those skilled in the art will understand and appreciate that a methodology could alternatively be represented as a series of interrelated states or events, such as in a state diagram. Moreover, not all acts illustrated in a methodology may be required for a novel implementation.

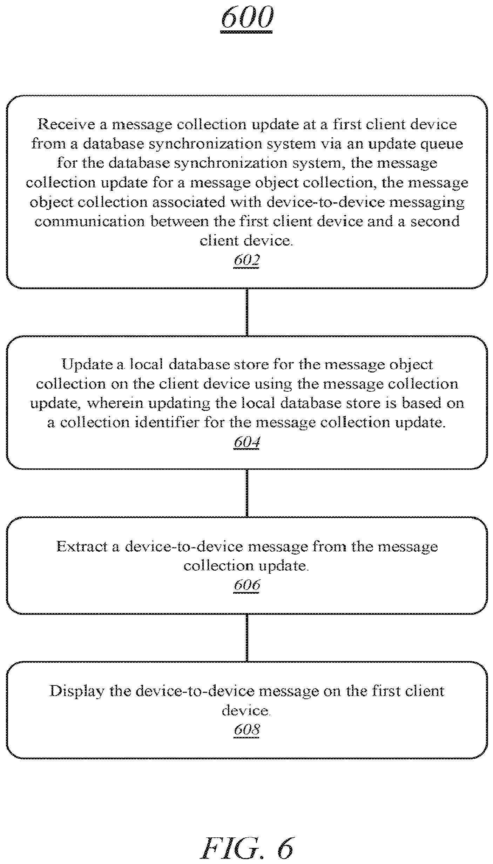

**FIG. 6** illustrates one embodiment of a logic flow 600. The logic flow 600 may be representative of some or all of the operations executed by one or more embodiments described herein.

In the illustrated embodiment shown in FIG. 6, the logic flow 600 may receive a message collection update at a first client device from a database synchronization system via an update queue for the database synchronization system, the message collection update for a message object collection, the message object collection associated with device-to-device messaging communication between the first client device and a second client device at block 602.

The logic flow 600 may update a local database store for the message object collection on the client device using the message collection update, wherein updating the local database store is based on a collection identifier for the message collection update at block 604.

The logic flow 600 may extract a device-to-device message from the message collection update at block 606.

The logic flow 600 may display the device-to-device message on the first client device at block 608.

The embodiments are not limited to this example.

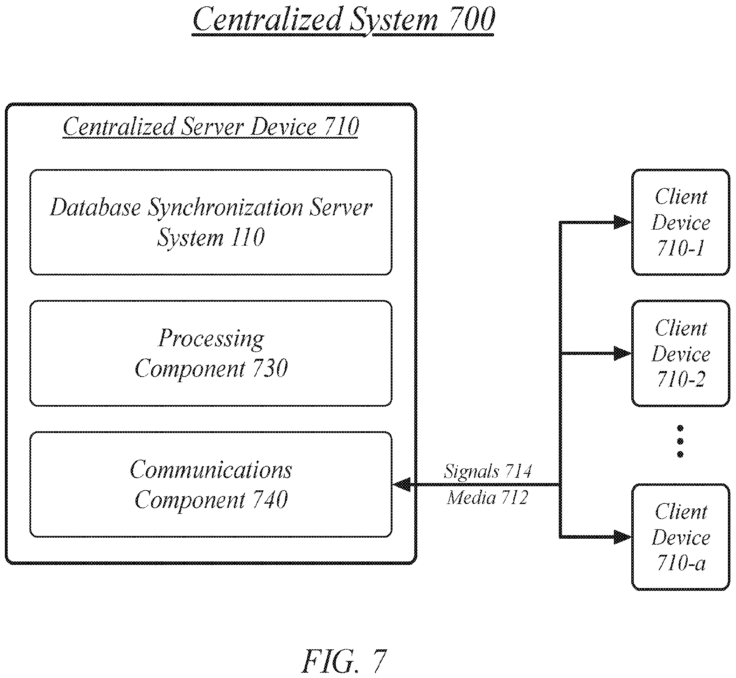

**FIG. 7** illustrates a block diagram of a centralized system 700. The centralized system 700 may implement some or all of the structure and/or operations for the replicated database messaging system 100 in a single computing entity, such as entirely within a single centralized server device 710.

The centralized server device 710 may comprise any electronic device capable of receiving, processing, and sending information for the replicated database messaging system 100. Examples of an electronic device may include without limitation an ultra-mobile device, a mobile device, a personal digital assistant (PDA), a mobile computing device, a smart phone, a telephone, a digital telephone, a cellular telephone, ebook readers, a handset, a one-way pager, a two-way pager, a messaging device, a computer, a personal computer (PC), a desktop computer, a laptop computer, a notebook computer, a netbook computer, a handheld computer, a tablet computer, a server, a server array or server farm, a web server, a network server, an Internet server, a work station, a mini-computer, a main frame computer, a supercomputer, a network appliance, a web appliance, a distributed computing system, multiprocessor systems, processor-based systems, consumer electronics, programmable consumer electronics, game devices, television, digital television, set top box, wireless access point, base station, subscriber station, mobile subscriber center, radio network controller, router, hub, gateway, bridge, switch, machine, or combination thereof. The embodiments are not limited in this context.

The centralized server device 710 may execute processing operations or logic for the replicated database messaging system 100 using a processing component 730. The processing component 730 may comprise various hardware elements, software elements, or a combination of both. Examples of hardware elements may include devices, logic devices, components, processors, microprocessors, circuits, processor circuits, circuit elements (e.g., transistors, resistors, capacitors, inductors, and so forth), integrated circuits, application specific integrated circuits (ASIC), programmable logic devices (PLD), digital signal processors (DSP), field programmable gate array (FPGA), memory units, logic gates, registers, semiconductor device, chips, microchips, chip sets, and so forth. Examples of software elements may include software components, programs, applications, computer programs, application programs, system programs, software development programs, machine programs, operating system software, middleware, firmware, software modules, routines, subroutines, functions, methods, procedures, software interfaces, application program interfaces (API), instruction sets, computing code, computer code, code segments, computer code segments, words, values, symbols, or any combination thereof. Determining whether an embodiment is implemented using hardware elements and/or software elements may vary in accordance with any number of factors, such as desired computational rate, power levels, heat tolerances, processing cycle budget, input data rates, output data rates, memory resources, data bus speeds and other design or performance constraints, as desired for a given implementation.

The centralized server device 710 may execute communications operations or logic for the replicated database messaging system 100 using communications component 740. The communications component 740 may implement any well-known communications techniques and protocols, such as techniques suitable for use with packet-switched networks (e.g., public networks such as the Internet, private networks such as an enterprise intranet, and so forth), circuit-switched networks (e.g., the public switched telephone network), or a combination of packet-switched networks and circuit-switched networks (with suitable gateways and translators). The communications component 740 may include various types of standard communication elements, such as one or more communications interfaces, network interfaces, network interface cards (NIC), radios, wireless transmitters/receivers (transceivers), wired and/or wireless communication media, physical connectors, and so forth. By way of example, and not limitation, communication media 712 includes wired communications media and wireless communications media. Examples of wired communications media may include a wire, cable, metal leads, printed circuit boards (PCB), backplanes, switch fabrics, semiconductor material, twisted-pair wire, coaxial cable, fiber optics, a propagated signal, and so forth. Examples of wireless communications media may include acoustic, radio-frequency (RF) spectrum, infrared and other wireless media.

The centralized server device 710 may communicate with other devices over a communications media 712 using communications signals 714 via the communications component 740. The devices may be internal or external to the centralized server device 710 as desired for a given implementation.

The centralized server device 710 may execute the database synchronization server system 110. The database synchronization server system 110 may include the server database management component 440, update queue management component 460, object collection store 443, and/or client device snapshot store 446. The database synchronization server system 110 may communicate with one or more client devices 710. The one or more client devices 710 may correspond to, without limitation, a smartphone device 150, tablet device 160, personal computer device 180, client device 305, inviting client device 420, invited client device 470, sending client device 520, receiving client device 570, and/or any other client device.

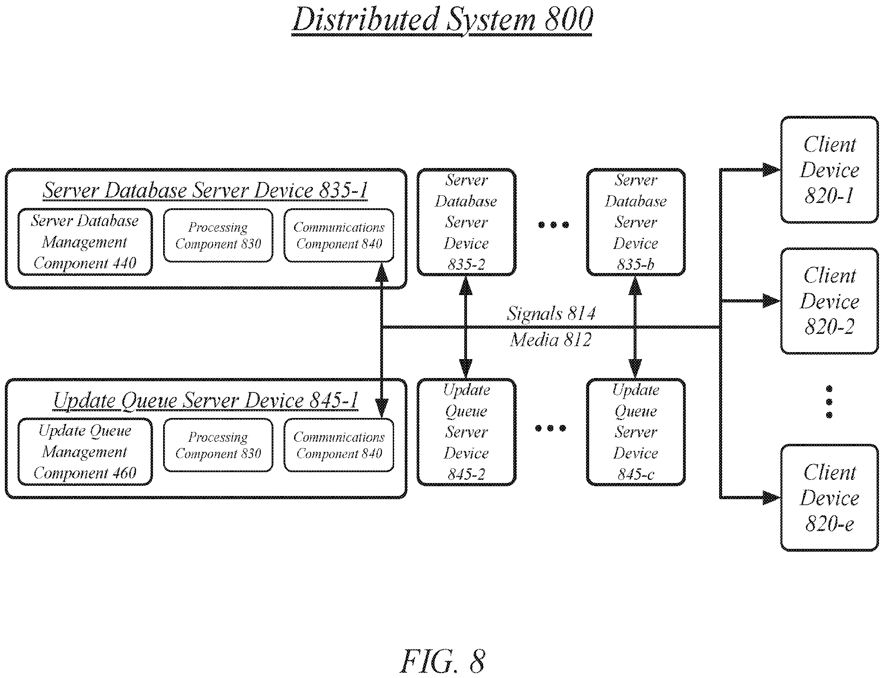

**FIG. 8** illustrates a block diagram of a distributed system 800. The distributed system 800 may distribute portions of the structure and/or operations for the replicated database messaging system 100 across multiple computing entities. Examples of distributed system 800 may include without limitation a client-server architecture, a 3-tier architecture, an N-tier architecture, a tightly-coupled or clustered architecture, a peer-to-peer architecture, a master-slave architecture, a shared database architecture, and other types of distributed systems. The embodiments are not limited in this context.

The distributed system 800 may comprise a plurality of server database server devices 835 and a plurality of update queue server devices 845. In general, the server devices 835, 845 may be the same or similar to the centralized server device 810 as described with reference to FIG. 7. For instance, the server devices 835, 845 may each comprise a processing component 830 and a communications component 840 which are the same or similar to the processing component 730 and the communications component 740, respectively, as described with reference to FIG. 7. In another example, the server devices 835, 845 may communicate over a communications media 812 using communications signals 814 via the communications components 840.

The server database server devices 835 may comprise or employ one or more programs that operate to perform various methodologies in accordance with the described embodiments. In one embodiment, for example, the server database server devices 835 may each implement a server database management component 440. The functions of the server database management component 440 may therefore be distributed across a plurality of server database server devices 835.

The update queue server devices 845 may comprise or employ one or more server programs that operate to perform various methodologies in accordance with the described embodiments. In one embodiment, for example, the update queue server devices 1145 may each implement an update queue management component 460. The functions of the update queue management component 460 may therefore be distributed across a plurality of update queue server devices 845.

The server devices 835, 845 may perform server operations for one or more client devices 820. The one or more client devices 820 may correspond to, without limitation, a smartphone device 150, tablet device 160, personal computer device 180, client device 305, inviting client device 420, invited client device 470, sending client device 520, receiving client device 570, client devices 710, and/or any other client device.

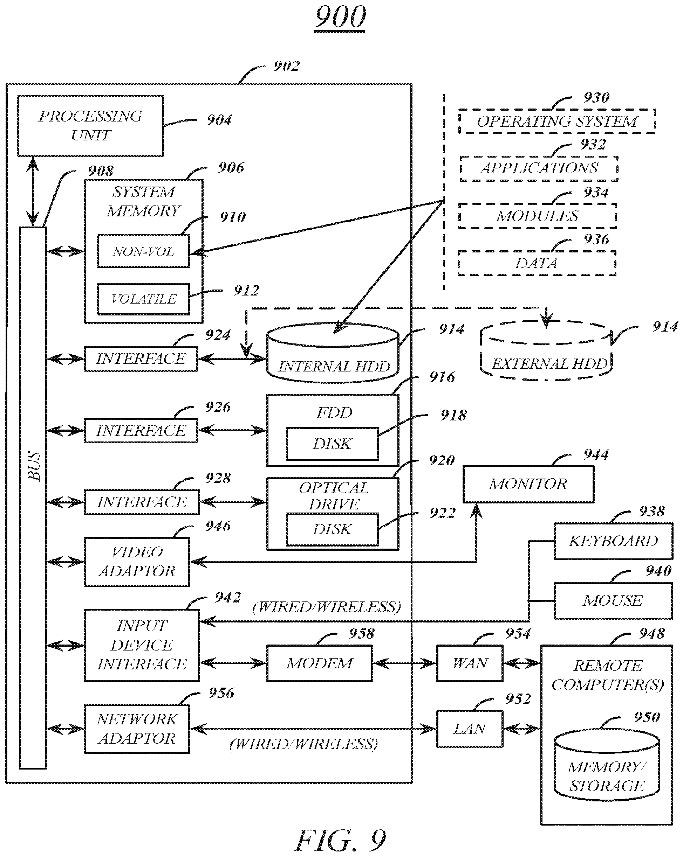

**FIG. 9** illustrates an embodiment of an exemplary computing architecture 900 suitable for implementing various embodiments as previously described. In one embodiment, the computing architecture 900 may comprise or be implemented as part of an electronic device. Examples of an electronic device may include those described with reference to FIG. 7 and 8, among others. The embodiments are not limited in this context.

As used in this application, the terms "system" and "component" are intended to refer to a computer-related entity, either hardware, a combination of hardware and software, software, or software in execution, examples of which are provided by the exemplary computing architecture 900. For example, a component can be, but is not limited to being, a process running on a processor, a processor, a hard disk drive, multiple storage drives (of optical and/or magnetic storage medium), an object, an executable, a thread of execution, a program, and/or a computer. By way of illustration, both an application running on a server and the server can be a component. One or more components can reside within a process and/or thread of execution, and a component can be localized on one computer and/or distributed between two or more computers. Further, components may be communicatively coupled to each other by various types of communications media to coordinate operations. The coordination may involve the uni-directional or bi-directional exchange of information. For instance, the components may communicate information in the form of signals communicated over the communications media. The information can be implemented as signals allocated to various signal lines. In such allocations, each message is a signal. Further embodiments, however, may alternatively employ data messages. Such data messages may be sent across various connections. Exemplary connections include parallel interfaces, serial interfaces, and bus interfaces.

The computing architecture 900 includes various common computing elements, such as one or more processors, multi-core processors, co-processors, memory units, chipsets, controllers, peripherals, interfaces, oscillators, timing devices, video cards, audio cards, multimedia input/output (I/O) components, power supplies, and so forth. The embodiments, however, are not limited to implementation by the computing architecture 900.

As shown in FIG. 9, the computing architecture 900 comprises a processing unit 904, a system memory 906 and a system bus 908. The processing unit 904 can be any of various commercially available processors, including without limitation an AMD® Athlon®, Duron® and Opteron® processors; ARM® application, embedded and secure processors; IBM® and Motorola® DragonBall® and PowerPC® processors; IBM and Sony® Cell processors; Intel® Celeron®, Core (2) Duo®, Itanium®, Pentium®, Xeon®, and XScale® processors; and similar processors. Dual microprocessors, multi-core processors, and other multi-processor architectures may also be employed as the processing unit 904.

The system bus 908 provides an interface for system components including, but not limited to, the system memory 906 to the processing unit 904. The system bus 908 can be any of several types of bus structure that may further interconnect to a memory bus (with or without a memory controller), a peripheral bus, and a local bus using any of a variety of commercially available bus architectures. Interface adapters may connect to the system bus 908 via a slot architecture. Example slot architectures may include without limitation Accelerated Graphics Port (AGP), Card Bus, (Extended) Industry Standard Architecture ((E)ISA), Micro Channel Architecture (MCA), NuBus, Peripheral Component Interconnect (Extended) (PCI(X)), PCI Express, Personal Computer Memory Card International Association (PCMCIA), and the like.

The computing architecture 900 may comprise or implement various articles of manufacture. An article of manufacture may comprise a computer-readable storage medium to store logic. Examples of a computer-readable storage medium may include any tangible media capable of storing electronic data, including volatile memory or non-volatile memory, removable or non-removable memory, erasable or non-erasable memory, writeable or re-writeable memory, and so forth. Examples of logic may include executable computer program instructions implemented using any suitable type of code, such as source code, compiled code, interpreted code, executable code, static code, dynamic code, object-oriented code, visual code, and the like. Embodiments may also be at least partly implemented as instructions contained in or on a non-transitory computer-readable medium, which may be read and executed by one or more processors to enable performance of the operations described herein.

The system memory 906 may include various types of computer-readable storage media in the form of one or more higher speed memory units, such as readonly memory (ROM), random-access memory (RAM), dynamic RAM (DRAM), Double-Data-Rate DRAM (DDRAM), synchronous DRAM (SDRAM), static RAM (SRAM), programmable ROM (PROM), erasable programmable ROM (EPROM), electrically erasable programmable ROM (EEPROM), flash memory, polymer memory such as ferroelectric polymer memory, ovonic memory, phase change or ferroelectric memory, silicon-oxide-nitride-oxide-silicon (SONOS) memory, magnetic or optical cards, an array of devices such as Redundant Array of Independent Disks (RAID) drives, solid state memory devices (e.g., USB memory, solid state drives (SSD) and any other type of storage media suitable for storing information. In the illustrated embodiment shown in FIG. 9, the system memory 906 can include non-volatile memory 910 and/or volatile memory 912. A basic input/output system (BIOS) can be stored in the non-volatile memory 910.

The computer 902 may include various types of computer-readable storage media in the form of one or more lower speed memory units, including an internal (or external) hard disk drive (HDD) 914, a magnetic floppy disk drive (FDD) 916 to read from or write to a removable magnetic disk 918, and an optical disk drive 920 to read from or write to a removable optical disk 922 (e.g., a CD-ROM or DVD). The HDD 914, FDD 916 and optical disk drive 920 can be connected to the system bus 908 by a HDD interface 924, an FDD interface 926 and an optical drive interface 928, respectively. The HDD interface 924 for external drive implementations can include at least one or both of Universal Serial Bus (USB) and IEEE 1394 interface technologies.

The drives and associated computer-readable media provide volatile and/or nonvolatile storage of data, data structures, computer-executable instructions, and so forth. For example, a number of program modules can be stored in the drives and memory units 910, 912, including an operating system 930, one or more application programs 932, other program modules 934, and program data 936. In one embodiment, the one or more application programs 932, other program modules 934, and program data 936 can include, for example, the various applications and/or components of the replicated database messaging system 100.

A user can enter commands and information into the computer 902 through one or more wire/wireless input devices, for example, a keyboard 938 and a pointing device, such as a mouse 940. Other input devices may include microphones, infrared (IR) remote controls, radio-frequency (RF) remote controls, game pads, stylus pens, card readers, dongles, finger print readers, gloves, graphics tablets, joysticks, keyboards, retina readers, touch screens (e.g., capacitive, resistive, etc.), trackballs, trackpads, sensors, styluses, and the like. These and other input devices are often connected to the processing unit 904 through an input device interface 942 that is coupled to the system bus 908, but can be connected by other interfaces such as a parallel port, IEEE 1394 serial port, a game port, a USB port, an IR interface, and so forth.

A monitor 944 or other type of display device is also connected to the system bus 908 via an interface, such as a video adaptor 946. The monitor 944 may be internal or external to the computer 902. In addition to the monitor 944, a computer typically includes other peripheral output devices, such as speakers, printers, and so forth.

The computer 902 may operate in a networked environment using logical connections via wire and/or wireless communications to one or more remote computers, such as a remote computer 948. The remote computer 948 can be a workstation, a server computer, a router, a personal computer, portable computer, microprocessor-based entertainment appliance, a peer device or other common network node, and typically includes many or all of the elements described relative to the computer 902, although, for purposes of brevity, only a memory/storage device 950 is illustrated. The logical connections depicted include wire/wireless connectivity to a local area network (LAN) 952 and/or larger networks, for example, a wide area network (WAN) 954. Such LAN and WAN networking environments are commonplace in offices and companies, and facilitate enterprise-wide computer networks, such as intranets, all of which may connect to a global communications network, for example, the Internet.

When used in a LAN networking environment, the computer 902 is connected to the LAN 952 through a wire and/or wireless communication network interface or adaptor 956. The adaptor 956 can facilitate wire and/or wireless communications to the LAN 952, which may also include a wireless access point disposed thereon for communicating with the wireless functionality of the adaptor 956.

When used in a WAN networking environment, the computer 902 can include a modem 958, or is connected to a communications server on the WAN 954, or has other means for establishing communications over the WAN 954, such as by way of the Internet. The modem 958, which can be internal or external and a wire and/or wireless device, connects to the system bus 908 via the input device interface 942. In a networked environment, program modules depicted relative to the computer 902, or portions thereof, can be stored in the remote memory/storage device 950. It will be appreciated that the network connections shown are exemplary and other means of establishing a communications link between the computers can be used.

The computer 902 is operable to communicate with wire and wireless devices or entities using the IEEE 802 family of standards, such as wireless devices operatively disposed in wireless communication (e.g., IEEE 802.9 over-the-air modulation techniques). This includes at least Wi-Fi (or Wireless Fidelity), WiMax, and Bluetooth™ wireless technologies, among others. Thus, the communication can be a predefined structure as with a conventional network or simply an ad hoc communication between at least two devices. Wi-Fi networks use radio technologies called IEEE 802.9x (a, b, g, n, etc.) to provide secure, reliable, fast wireless connectivity. A Wi-Fi network can be used to connect computers to each other, to the Internet, and to wire networks (which use IEEE 802.3-related media and functions).

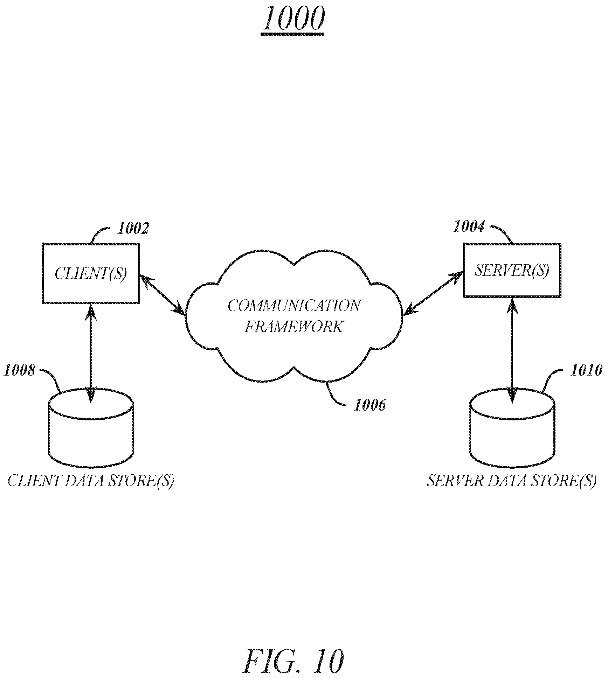

**FIG. 10** illustrates a block diagram of an exemplary communications architecture 1000 suitable for implementing various embodiments as previously described. The communications architecture 1000 includes various common communications elements, such as a transmitter, receiver, transceiver, radio, network interface, baseband processor, antenna, amplifiers, filters, power supplies, and so forth. The embodiments, however, are not limited to implementation by the communications architecture 1000.

As shown in FIG. 10, the communications architecture 1000 comprises includes one or more clients 1002 and servers 1004. The clients 1002 may implement one or more client devices. Client devices may correspond to, without limitation, a smartphone device 150, tablet device 160, personal computer device 180, client device 305, inviting client device 420, invited client device 470, sending client device 520, receiving client device 570, client devices 710, client devices 820, and/or any other client device. The servers 1304 may implement the centralized server device 710, server database server devices 835, update queue server devices 845, and/or any other server devices. The clients 1002 and the servers 1004 are operatively connected to one or more respective client data stores 1008 and server data stores 1010 that can be employed to store information local to the respective clients 1002 and servers 1004, such as cookies and/or associated contextual information.

The clients 1002 and the servers 1004 may communicate information between each other using a communication framework 1006. The communications framework 1006 may implement any well-known communications techniques and protocols. The communications framework 1006 may be implemented as a packet-switched network (e.g., public networks such as the Internet, private networks such as an enterprise intranet, and so forth), a circuit-switched network (e.g., the public switched telephone network), or a combination of a packet-switched network and a circuit-switched network (with suitable gateways and translators).

The communications framework 1006 may implement various network interfaces arranged to accept, communicate, and connect to a communications network. A network interface may be regarded as a specialized form of an input output interface. Network interfaces may employ connection protocols including without limitation direct connect, Ethernet (e.g., thick, thin, twisted pair 10/100/1000 Base T, and the like), token ring, wireless network interfaces, cellular network interfaces, IEEE 802.11a-x network interfaces, IEEE 802.16 network interfaces, IEEE 802.20 network interfaces, and the like. Further, multiple network interfaces may be used to engage with various communications network types. For example, multiple network interfaces may be employed to allow for the communication over broadcast, multicast, and unicast networks. Should processing requirements dictate a greater amount speed and capacity, distributed network controller architectures may similarly be employed to pool, load balance, and otherwise increase the communicative bandwidth required by clients 1002 and the servers 1004. A communications network may be any one and the combination of wired and/or wireless networks including without limitation a direct interconnection, a secured custom connection, a private network (e.g., an enterprise intranet), a public network (e.g., the Internet), a Personal Area Network (PAN), a Local Area Network (LAN), a Metropolitan Area Network (MAN), an Operating Missions as Nodes on the Internet (OMNI), a Wide Area Network (WAN), a wireless network, a cellular network, and other communications networks.

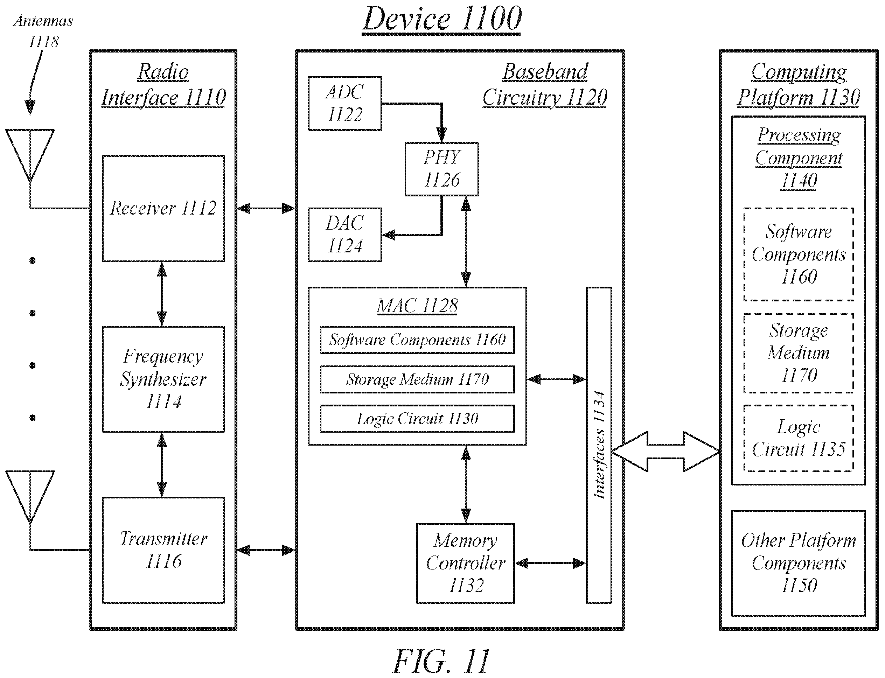

**FIG. 11** illustrates an embodiment of a device 1100 for use in a multicarrier OFDM system, such as the replicated database messaging system 100. Device 1100 may implement, for example, software components 1160 as described with reference to replicated database messaging system 100 and/or a logic circuit 1135. The logic circuit 1135 may include physical circuits to perform operations described for the replicated database messaging system 100. As shown in FIG. 11, device 1100 may include a radio interface 1110, baseband circuitry 1120, and computing platform 1130, although embodiments are not limited to this configuration.

The device 1100 may implement some or all of the structure and/or operations for the replicated database messaging system 100 and/or logic circuit 1135 in a single computing entity, such as entirely within a single device. Alternatively, the device 1100 may distribute portions of the structure and/or operations for the replicated database messaging system 100 and/or logic circuit 1135 across multiple computing entities using a distributed system architecture, such as a client-server architecture, a 3-tier architecture, an N-tier architecture, a tightly-coupled or clustered architecture, a peer-to-peer architecture, a master-slave architecture, a shared database architecture, and other types of distributed systems. The embodiments are not limited in this context.

In one embodiment, radio interface 1110 may include a component or combination of components adapted for transmitting and/or receiving single carrier or multi-carrier modulated signals (e.g., including complementary code keying (CCK) and/or orthogonal frequency division multiplexing (OFDM) symbols) although the embodiments are not limited to any specific over-the-air interface or modulation scheme. Radio interface 1110 may include, for example, a receiver 1112, a transmitter 1116 and/or a frequency synthesizer 1114. Radio interface 1110 may include bias controls, a crystal oscillator and/or one or more antennas 1118. In another embodiment, radio interface 1110 may use external voltage-controlled oscillators (VCOs), surface acoustic wave filters, intermediate frequency (IF) filters and/or RF filters, as desired. Due to the variety of potential RF interface designs an expansive description thereof is omitted.

Baseband circuitry 1120 may communicate with radio interface 1110 to process receive and/or transmit signals and may include, for example, an analog-to-digital converter 1122 for down converting received signals, a digital-to-analog converter 1124 for up converting signals for transmission. Further, baseband circuitry 1120 may include a baseband or physical layer (PHY) processing circuit 1156 for PHY link layer processing of respective receive/transmit signals. Baseband circuitry 1120 may include, for example, a processing circuit 1128 for medium access control (MAC)/data link layer processing. Baseband circuitry 1120 may include a memory controller 1132 for communicating with processing circuit 1128 and/or a computing platform 1130, for example, via one or more interfaces 1134.

In some embodiments, PHY processing circuit 1126 may include a frame construction and/or detection module, in combination with additional circuitry such as a buffer memory, to construct and/or deconstruct communication frames, such as radio frames. Alternatively or in addition, MAC processing circuit 1128 may share processing for certain of these functions or perform these processes independent of PHY processing circuit 1126. In some embodiments, MAC and PHY processing may be integrated into a single circuit.

The computing platform 1130 may provide computing functionality for the device 1100. As shown, the computing platform 1130 may include a processing component 1140. In addition to, or alternatively of, the baseband circuitry 1120, the device 1100 may execute processing operations or logic for the replicated database messaging system 100 and logic circuit 1135 using the processing component 1140. The processing component 1140 (and/or PHY 1126 and/or MAC 1128) may comprise various hardware elements, software elements, or a combination of both. Examples of hardware elements may include devices, logic devices, components, processors, microprocessors, circuits, processor circuits, circuit elements (e.g., transistors, resistors, capacitors, inductors, and so forth), integrated circuits, application specific integrated circuits (ASIC), programmable logic devices (PLD), digital signal processors (DSP), field programmable gate array (FPGA), memory units, logic gates, registers, semiconductor device, chips, microchips, chip sets, and so forth. Examples of software elements may include software components, programs, applications, computer programs, application programs, system programs, software development programs, machine programs, operating system software, middleware, firmware, software modules, routines, subroutines, functions, methods, procedures, software interfaces, application program interfaces (API), instruction sets, computing code, computer code, code segments, computer code segments, words, values, symbols, or any combination thereof. Determining whether an embodiment is implemented using hardware elements and/or software elements may vary in accordance with any number of factors, such as desired computational rate, power levels, heat tolerances, processing cycle budget, input data rates, output data rates, memory resources, data bus speeds and other design or performance constraints, as desired for a given implementation.

The computing platform 1130 may further include other platform components 1150. Other platform components 1150 include common computing elements, such as one or more processors, multi-core processors, co-processors, memory units, chipsets, controllers, peripherals, interfaces, oscillators, timing devices, video cards, audio cards, multimedia input/output (I/O) components (e.g., digital displays), power supplies, and so forth. Examples of memory units may include without limitation various types of computer readable and machine readable storage media in the form of one or more higher speed memory units, such as read-only memory (ROM), random-access memory (RAM), dynamic RAM (DRAM), Double-Data-Rate DRAM (DDRAM), synchronous DRAM (SDRAM), static RAM (SRAM), programmable ROM (PROM), erasable programmable ROM (EPROM), electrically erasable programmable ROM (EEPROM), flash memory, polymer memory such as ferroelectric polymer memory, ovonic memory, phase change or ferroelectric memory, silicon-oxide-nitride-oxide-silicon (SONOS) memory, magnetic or optical cards, an array of devices such as Redundant Array of Independent Disks (RAID) drives, solid state memory devices (e.g., USB memory, solid state drives (SSD) and any other type of storage media suitable for storing information.

Device 1100 may be, for example, an ultra-mobile device, a mobile device, a fixed device, a machine-to-machine (M2M) device, a personal digital assistant (PDA), a mobile computing device, a smart phone, a telephone, a digital telephone, a cellular telephone, user equipment, eBook readers, a handset, a one-way pager, a two-way pager, a messaging device, a computer, a personal computer (PC), a desktop computer, a laptop computer, a notebook computer, a netbook computer, a handheld computer, a tablet computer, a server, a server array or server farm, a web server, a network server, an Internet server, a work station, a mini-computer, a main frame computer, a supercomputer, a network appliance, a web appliance, a distributed computing system, multiprocessor systems, processor-based systems, consumer electronics, programmable consumer electronics, game devices, television, digital television, set top box, wireless access point, base station, node B, evolved node B (eNB), subscriber station, mobile subscriber center, radio network controller, router, hub, gateway, bridge, switch, machine, or combination thereof. Accordingly, functions and/or specific configurations of device 1100 described herein, may be included or omitted in various embodiments of device 1100, as suitably desired. In some embodiments, device 1100 may be configured to be compatible with protocols and frequencies associated one or more of the 3GPP LTE Specifications and/or IEEE 1102.16 Standards for WMANs, and/or other broadband wireless networks, cited herein, although the embodiments are not limited in this respect.

Embodiments of device 1100 may be implemented using single input single output (SISO) architectures. However, certain implementations may include multiple antennas (e.g., antennas 1118) for transmission and/or reception using adaptive antenna techniques for beamforming or spatial division multiple access (SDMA) and/or using MIMO communication techniques.

The components and features of device 1100 may be implemented using any combination of discrete circuitry, application specific integrated circuits (ASICs), logic gates and/or single chip architectures. Further, the features of device 1100 may be implemented using microcontrollers, programmable logic arrays and/or microprocessors or any combination of the foregoing where suitably appropriate. It is noted that hardware, firmware and/or software elements may be collectively or individually referred to herein as "logic" or "circuit."

It should be appreciated that the exemplary device 1100 shown in the block diagram of FIG. 11 may represent one functionally descriptive example of many potential implementations. Accordingly, division, omission or inclusion of block functions depicted in the accompanying figures does not infer that the hardware components, circuits, software and/or elements for implementing these functions would be necessarily be divided, omitted, or included in embodiments.

A computer-implemented method may comprise receiving a message collection update at a first client device from a database synchronization system via an update queue for the database synchronization system, the message collection update for a message object collection, the message object collection associated with device-to-device messaging communication between the first client device and a second client device; updating a local database store for the message object collection on the client device using the message collection update, wherein updating the local database store is based on a collection identifier for the message collection update; extracting a device-to-device message from the message collection update; and displaying the device-to-device message on the first client device.

A computer-implemented method may further comprise the message collection update comprising one or more of a text message, an image, a video, a voice call initiation request, and a video call initiation request.

A computer-implemented method may further comprise the message collection update associated with a primary key and a sorting key, the primary key comprising a message identifier, the sorting key comprising a timestamp for the message collection update.

A computer-implemented method may further comprise the message object collection comprising a plurality of device-to-device message objects, wherein each of the plurality of device-to-device message objects is addressed to the first client device.

A computer-implemented method may further comprise displaying the device-to-device message in a device-to-device message thread display.

A computer-implemented method may further comprise deleting the device-to-device message from the first client device after the extinction of a message display timer.

A computer-implemented method may further comprise the message display timer tracking from one of a sending time for the device-to-device message, a receiving time for the device-to-device message, and a viewing time for the device-to-device message.

A computer-implemented method may further comprise retrieving device-to-device configuration information specific to the device-to-device messaging communication between the first client device and the second client device; and extracting the device-to-device message from the message collection update based on the device-to-device configuration information.

A computer-implemented method may further comprise the device-to-device messaging communication between the first client device and the second client device embodied in a device-to-device message thread, further comprising: receiving a user delete command for the device-to-device message thread; and deleting the device-to-device configuration information specific to the device-to-device messaging communication between the first client device and the second client device in response to receiving the user delete command for the device-to-device message thread.

A computer-implemented method may further comprise the device-to-device messaging communication between the first client device and the second client device embodied in a device-to-device message thread, further comprising: receiving a messaging composition interaction via the user interface for the device-to-device message thread, the messaging composition interaction comprising a user message; generating a device-to-device message object comprising the user message; and writing the device-to-device message object to a second-client-device-specific message object collection, wherein the second-client-device-specific message object collection is replicated to the second client device by the database synchronization system.

A computer-implemented method may further comprise the device-to-device message object subject to a spam detection process by the database synchronization system, the spam detection process based on one or more of send rate, type-specific send rate, and database synchronization system protocol compliance.

A computer-implemented method may further comprise the first client device associated with a first user account, further comprising: receiving a device-to-device messaging communication invitation on the first client device, the device-to-device messaging communication invitation received as invitation object, the invitation object specifying a second-client-device-specific message object collection; accepting the device-to-device messaging communication invitation on the first client in response to receiving the device-to-device messaging communication invitation on the first client device; and deleting the invitation object in response to receiving the device-to-device messaging communication invitation, wherein deleting the device-to-device messaging communication invitation is operative to delete the invitation object from one or more other client devices associated with the first user account.

A computer-implemented method may further comprise wherein the device-to-device messaging communication invitation is bound to a first client device receiving user activity in association with the user account.

A computer-implemented method may further comprise wherein the user activity corresponds to a user activation of a messaging client.

A computer-implemented method may further comprise generating a device-to-device message thread entry in a messaging inbox display on the first client device in response to receiving the device-to-device messaging communication invitation on the first client device.

A computer-implemented method may further comprise the device-to-device message associated with a device-to-device message thread between the first client device and the second client device, further comprising: receiving a user message thread name for the device-to-device message thread; and displaying the user message thread name in association with a device-to-device message thread entry in a messaging inbox display on the first client device.

A computer-implemented method may further comprise the first client device associated with a first user account, the second client device associated with a second user account, further comprising: displaying a device-to-device message thread entry in a messaging inbox display on the first client device, the device-to-device message thread entry for a device-to-device message thread between the first client device and the second client device; and displaying a second device-to-device message thread entry in a messaging inbox display on the first client device, the second device-to-device message thread entry for a second device-to-device message thread between the first client device and a third client device, the third client device associated with the second user account.

A computer-implemented method may further comprise the first client device associated with a first user account, the second client device associated with a second user account, further comprising: displaying a user-to-user message thread display on the first client device, the user-to-user message thread display associated with a user-to-user message thread between the first user account and the second user account, the user-to-user message thread display including a device-to-device message thread invocation control; receiving a user activation of the device-to-device message thread invocation control in association with the user-to-user message thread display; and sending a device-to-device messaging communication invitation to the second user account in response to receiving the user activation of the device-to-device message thread invocation control.

A computer-implemented method may further comprise the first client device associated with a first user account, the second client device associated with a second user account, further comprising: displaying a user-to-user message thread display on the first client device, the user-to-user message thread display associated with a user-to-user message thread between the first user account and the second user account, the user-to-user message thread display including a device-to-device message thread invocation control; retrieving a device-to-device messaging support setting for the second user account; and deactivating the device-to-device message thread invocation control where the device-to-device messaging support setting for the second user account indicates that the second user account lacks device-to-device messaging support.

An apparatus may comprise a processor circuit on a first client device; a local queue component of a messaging client operative on the processor circuit to receive a message collection update at the first client device from a database synchronization system via an update queue for the database synchronization system, the message collection update for a message object collection, the message object collection associated with device-to-device messaging communication between the first client device and a second client device; and a local database management component of the messaging client operative on the processor circuit to update a local database store for the message object collection on the client device using the message collection update, wherein updating the local database store is based on a collection identifier for the message collection update; and extract a device-to-device message from the message collection update, wherein extracting the device-to-device message from the message collection update empowers the messaging client to display the device-to-device message on the first client device. The apparatus may be operative to implement any of the computer-implemented methods described herein.

At least one computer-readable storage medium may comprise instructions that, when executed, cause a system to perform any of the computer-implemented methods described herein.

Some embodiments may be described using the expression "one embodiment" or "an embodiment" along with their derivatives. These terms mean that a particular feature, structure, or characteristic described in connection with the embodiment is included in at least one embodiment. The appearances of the phrase "in one embodiment" in various places in the specification are not necessarily all referring to the same embodiment. Further, some embodiments may be described using the expression "coupled" and "connected" along with their derivatives. These terms are not necessarily intended as synonyms for each other. For example, some embodiments may be described using the terms "connected" and/or "coupled" to indicate that two or more elements are in direct physical or electrical contact with each other. The term "coupled," however, may also mean that two or more elements are not in direct contact with each other, but yet still co-operate or interact with each other.

With general reference to notations and nomenclature used herein, the detailed descriptions herein may be presented in terms of program procedures executed on a computer or network of computers. These procedural descriptions and representations are used by those skilled in the art to most effectively convey the substance of their work to others skilled in the art.

A procedure is here, and generally, conceived to be a self-consistent sequence of operations leading to a desired result. These operations are those requiring physical manipulations of physical quantities. Usually, though not necessarily, these quantities take the form of electrical, magnetic or optical signals capable of being stored, transferred, combined, compared, and otherwise manipulated. It proves convenient at times, principally for reasons of common usage, to refer to these signals as bits, values, elements, symbols, characters, terms, numbers, or the like. It should be noted, however, that all of these and similar terms are to be associated with the appropriate physical quantities and are merely convenient labels applied to those quantities.

Further, the manipulations performed are often referred to in terms, such as adding or comparing, which are commonly associated with mental operations performed by a human operator. No such capability of a human operator is necessary, or desirable in most cases, in any of the operations described herein which form part of one or more embodiments. Rather, the operations are machine operations. Useful machines for performing operations of various embodiments include general purpose digital computers or similar devices.

Various embodiments also relate to apparatus or systems for performing these operations. This apparatus may be specially constructed for the required purpose or it may comprise a general purpose computer as selectively activated or reconfigured by a computer program stored in the computer. The procedures presented herein are not inherently related to a particular computer or other apparatus. Various general purpose machines may be used with programs written in accordance with the teachings herein, or it may prove convenient to construct more specialized apparatus to perform the required method steps. The required structure for a variety of these machines will appear from the description given.

It is emphasized that the Abstract of the Disclosure is provided to allow a reader to quickly ascertain the nature of the technical disclosure. It is submitted with the understanding that it will not be used to interpret or limit the scope or meaning of the claims. In addition, in the foregoing Detailed Description, it can be seen that various features are grouped together in a single embodiment for the purpose of streamlining the disclosure. This method of disclosure is not to be interpreted as reflecting an intention that the claimed embodiments require more features than are expressly recited in each claim. Rather, as the following claims reflect, inventive subject matter lies in less than all features of a single disclosed embodiment. Thus the following claims are hereby incorporated into the Detailed Description, with each claim standing on its own as a separate embodiment. In the appended claims, the terms "including" and "in which" are used as the plain-English equivalents of the respective terms "comprising" and "wherein," respectively. Moreover, the terms "first," "second," "third," and so forth, are used merely as labels, and are not intended to impose numerical requirements on their objects.

What has been described above includes examples of the disclosed architecture. It is, of course, not possible to describe every conceivable combination of components and/or methodologies, but one of ordinary skill in the art may recognize that many further combinations and permutations are possible. Accordingly, the novel architecture is intended to embrace all such alterations, modifications and variations that fall within the spirit and scope of the appended claims.

## Claims

1. A computer-implemented method, comprising:
receiving a message collection update at a first client device from a database synchronization system via an update queue for the database synchronization system, the message collection update for a message object collection, the message object collection associated with device-to-device messaging communication between the first client device and a second client device;
updating a local database store for the message object collection on the client device using the message collection update, wherein updating the local database store is based on a collection identifier for the message collection update;
extracting a device-to-device message from the message collection update; and
displaying the device-to-device message on the first client device.

2. The method of claim 1, the message collection update associated with a primary key and a sorting key, the primary key comprising a message identifier, the sorting key comprising a timestamp for the message collection update.

3. The method of claim 1 or 2, the message object collection comprising a plurality of device-to-device message objects, wherein each of the plurality of device-to-device message objects is addressed to the first client device.

4. The method of any of claims 1 to 3, further comprising:
retrieving device-to-device configuration information specific to the device-to-device messaging communication between the first client device and the second client device; and
extracting the device-to-device message from the message collection update based on the device-to-device configuration information.

5. The method of any of claims 1 to 4, the device-to-device messaging communication between the first client device and the second client device embodied in a device-to-device message thread, further comprising:
receiving a messaging composition interaction via the user interface for the device-to-device message thread, the messaging composition interaction comprising a user message;
generating a device-to-device message object comprising the user message; and
writing the device-to-device message object to a second-client-device-specific message object collection, wherein the second-client-device-specific message object collection is replicated to the second client device by the database synchronization system.

6. The method of any of claims 1 to 5, the first client device associated with a first user account, further comprising:
receiving a device-to-device messaging communication invitation on the first client device, the device-to-device messaging communication invitation received as invitation object, the invitation object specifying a second-client-device-specific message object collection;
accepting the device-to-device messaging communication invitation on the first client in response to receiving the device-to-device messaging communication invitation on the first client device; and
deleting the invitation object in response to receiving the device-to-device messaging communication invitation, wherein deleting the device-to-device messaging communication invitation is operative to delete the invitation object from one or more other client devices associated with the first user account.

7. The method of any of claims 1 to 6, the first client device associated with a first user account, the second client device associated with a second user account, further comprising:
displaying a user-to-user message thread display on the first client device, the user-to-user message thread display associated with a user-to-user message thread between the first user account and the second user account, the user-to-user message thread display including a device-to-device message thread invocation control;
receiving a user activation of the device-to-device message thread invocation control in association with the user-to-user message thread display; and
sending a device-to-device messaging communication invitation to the second user account in response to receiving the user activation of the device-to-device message thread invocation control.

8. An apparatus, comprising:
a processor circuit on a first client device;
a local queue component of a messaging client operative on the processor circuit to receive a message collection update at the first client device from a database synchronization system via an update queue for the database synchronization system, the message collection update for a message object collection, the message object collection associated with device-to-device messaging communication between the first client device and a second client device;
and
a local database management component of the messaging client operative on the processor circuit to update a local database store for the message object collection on the client device using the message collection update, wherein updating the local database store is based on a collection identifier for the message collection update; and extract a device-to-device message from the message collection update, wherein extracting the device-to-device message from the message collection update empowers the messaging client to display the device-to-device message on the first client device.

9. The apparatus of claim 8, the message collection update associated with a primary key and a sorting key, the primary key comprising a message identifier, the sorting key comprising a timestamp for the message collection update.

10. The apparatus of claim 8 or 9, the message object collection comprising a plurality of device-to-device message objects, wherein each of the plurality of device-to-device message objects is addressed to the first client device.

11. The apparatus of any of claims 8 to 10 further comprising:
the local database management component operative to retrieve device-to-device configuration information specific to the device-to-device messaging communication between the first client device and the second client device;
and extract the device-to-device message from the message collection update based on the device-to-device configuration information.

12. The apparatus of any of claims 8 to 11, the device-to-device messaging communication between the first client device and the second client device embodied in a device-to-device message thread, further comprising:
the messaging client operative to receive a messaging composition interaction via the user interface for the device-to-device message thread, the messaging composition interaction comprising a user message; and
the local database management component operative to generate a device-to-device message object comprising the user message; and write the device-to-device message object to a second-client-device-specific message object collection, wherein the second-client-device-specific message object collection is replicated to the second client device by the database synchronization system.

13. The apparatus of any of claims 8 to 12, the first client device associated with a first user account, further comprising:
the local queue component operative to receive a device-to-device messaging communication invitation on the first client device, the device-to-device messaging communication invitation received as invitation object, the invitation object specifying a second-client-device-specific message object collection;
and
the local database management component operative to accept the device-to-device messaging communication invitation on the first client in response to receiving the device-to-device messaging communication invitation on the first client device; and delete the invitation object in response to receiving the device-to-device messaging communication invitation, wherein deleting the device-to-device messaging communication invitation is operative to delete the invitation object from one or more other client devices associated with the first user account.

14. The apparatus of any of claims 8 to 13, the first client device associated with a first user account, the second client device associated with a second user account, further comprising:
the messaging client operative to display a user-to-user message thread display on the first client device, the user-to-user message thread display associated with a user-to-user message thread between the first user account and the second user account, the user-to-user message thread display including a device-to-device message thread invocation control; and receive a user activation of the device-to-device message thread invocation control in association with the user-to-user message thread display; and
the local queue component operative to send a device-to-device messaging communication invitation to the second user account in response to receiving the user activation of the device-to-device message thread invocation control.

15. At least one computer-readable storage medium comprising instructions that, when executed, cause a system to perform a method according to any of claims 1 to 7.
